(19) Europäisches Patentamt
European Patent Office
Office européen des brevets

(11) **EP 4 769 613 A1**

(12) **EUROPEAN PATENT APPLICATION**

(43) Date of publication:
**01.07.2026 Bulletin 2026/27**

(21) Application number: **25225228.3**

(22) Date of filing: **18.12.2025**

(51) International Patent Classification (IPC):
$H01M\ 10/0525\ ^{(2010.01)}$  $H01M\ 10/0565\ ^{(2010.01)}$
$H01M\ 10/0566\ ^{(2010.01)}$  $H01M\ 10/0585\ ^{(2010.01)}$
$H01M\ 10/0569\ ^{(2010.01)}$

(52) Cooperative Patent Classification (CPC):
**H01M 10/0565; H01M 10/0525; H01M 10/0566;**
**H01M 10/0585;** H01M 10/0569; H01M 2300/0085

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **27.12.2024 KR 20240199224**
**18.09.2025 KR 20250134667**

(71) Applicants:
• **SK On Co., Ltd.**
**Seoul 03161 (KR)**
• **INDUSTRY-ACADEMIC COOPERATION**
**FOUNDATION,**
**YONSEI UNIVERSITY**
**Seoul 03722 (KR)**

(72) Inventors:
• **CHOI, Jae Hoon**
**34124 Daejeon (KR)**
• **KO, Jeong Hyun**
**34124 Daejeon (KR)**
• **PARK, Jong Hyeok**
**Seoul (KR)**
• **KANG, Sang Goo**
**Seoul (KR)**
• **CHOI, Min Su**
**Seoul (KR)**

(74) Representative: **Prüfer & Partner mbB**
**Patentanwälte · Rechtsanwälte**
**Sohnckestraße 12**
**81479 München (DE)**

(54) **SECONDARY BATTERY AND METHOD OF PREPARING THE SAME**

(57) A secondary battery according to the present disclosure comprises a cathode, an anode facing the cathode, and a gel polymer electrolyte including a cross-linkable monomer, a polymerization product of the cross-linkable monomer, and a liquid electrolyte. A conversion rate of the cross-linkable monomer is 85% or more.

[FIG. 1]

EP 4 769 613 A1

**Description**

BACKGROUND OF THE INVENTION

1. Field

The present disclosure provides a secondary battery and a method of preparing the same.

2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as hybrid vehicles.

Examples of secondary batteries may include a lithium secondary battery, a nickelcadmium battery, and a nickel-hydrogen battery. Among these, the lithium secondary battery has been actively developed and applied due to its high operating voltage, high energy density per unit weight, and advantages in charging speed and weight reduction.

For example, the lithium secondary battery may include: an electrode assembly including a cathode, an anode, and a separator; and an electrolyte that impregnates the electrode assembly. The lithium secondary battery may further include, for example, a pouch-type outer case that accommodates the electrode assembly and the electrolyte.

Meanwhile, the secondary battery may exhibit structural deformation of a lithium metal oxide and side reactions with the electrolyte during repeated charging and discharging. In this case, the cycle life (e.g., capacity retention) of the secondary battery may deteriorate.

In particular, the secondary battery is exposed to high-temperature conditions during repeated charging and discharging and overcharging. In this case, the above-described problems may be accelerated, leading to battery swelling (internal gas generation and increased thickness), increased internal resistance, and deterioration in cycle life.

SUMMARY OF THE INVENTION

An object of the present disclosure is to provide a secondary battery having enhanced electrochemical properties.

Another object of the present disclosure is to provide a method of preparing the secondary battery.

A secondary battery according to the present disclosure may include: a cathode; an anode facing the cathode; and a gel polymer electrolyte including a cross-linkable monomer, a polymerization product of the cross-linkable monomer, and a liquid electrolyte. A conversion rate of the cross-linkable monomer may be 85% or more.

According to exemplary embodiments, the conversion rate of the cross-linkable monomer may be 88% or more.

According to exemplary embodiments, the conversion rate of the cross-linkable monomer may be defined by Equation 1 below:

[Equation 1]

$$\text{Conversion rate (\%)} = \left\{ 1 - \frac{1}{3} \times \left( \frac{I_t^1}{I_0^1} + \frac{I_t^2}{I_0^2} + \frac{I_t^3}{I_0^3} \right) \right\} \times 100$$

In Equation 1, the secondary battery may be prepared from a preliminary secondary battery including a cathode, an anode, and a composition for a gel polymer electrolyte including the cross-linkable monomer and the liquid electrolyte.

According to $^1$H NMR analysis of the composition for the gel polymer electrolyte and the gel polymer electrolyte, at least one first peak within a range of 6.25 ppm to 6.4 ppm; at least one second peak within a range of 6 ppm or more and less than 6.25 ppm; at least one third peak within a range of 5.5 ppm or more and less than 6 ppm; and at least one fourth peak within a range of 4 ppm to 5 ppm may be observed, respectively.

$I_0^1$ is a ratio of an integral area of the first peak to an integral area of the fourth peak before curing of the composition for the gel polymer electrolyte, $I_0^2$ is a ratio of an integral area of the second peak to the integral area of the fourth peak before curing of the composition for the gel polymer electrolyte, and $I_0^3$ is a ratio of an integral area of the third peak to the integral area of the fourth peak before curing of the composition for the gel polymer electrolyte.

$I_t^1$ is a ratio of an integral area of the first peak to an integral area of the fourth peak when the curing time of the gel polymer electrolyte is t minutes, $I_t^2$ is a ratio of an integral area of the second peak to the integral area of the fourth peak when the curing time of the gel polymer electrolyte is t minutes, and $I_t^3$ is a ratio of an integral area of the third peak to the integral area of the fourth peak when the curing time of the gel polymer electrolyte is t minutes.

According to exemplary embodiments, the conversion rate of the cross-linkable monomer may be defined by Equation 2 below.

[Equation 2]

$$\text{Conversion rate (\%)} = \left(1 - \frac{A_{C=C,t}/A_{ref,t}}{A_{C=C,0}/A_{ref,0}}\right) \times 100$$

In Equation 2, the secondary battery may be prepared from a preliminary secondary battery including a cathode, an anode, and a composition for a gel polymer electrolyte including the cross-linkable monomer and the liquid electrolyte.

$A_{ref,0}$ is an integral area of a peak within the range of 1800 cm$^{-1}$ to 1810 cm$^{-1}$ or an integral area of a peak within the range of 1065 cm$^{-1}$ to 1075 cm$^{-1}$, as determined by Fourier transform infrared (FT-IR) analysis before curing the composition for the gel polymer electrolyte.

$A_{c=c,0}$ is an integral area of a peak within the range of 1615 cm$^{-1}$ to 1625 cm$^{-1}$ or an integral area of a peak within the range of 1630 cm$^{-1}$ to 1640 cm$^{-1}$, as determined by Fourier transform infrared (FT-IR) analysis before curing the composition for the gel polymer electrolyte.

$A_{ref,t}$ is an integral area of a peak within the range of 1800 cm$^{-1}$ to 1810 cm$^{-1}$ or an integral area of a peak within the range of 1065 cm$^{-1}$ to 1075 cm$^{-1}$, as determined by Fourier transform infrared (FT-IR) analysis when the curing time of the gel polymer electrolyte is t minutes.

$A_{c=c,t}$ is an integral area of a peak within the range of 1615 cm$^{-1}$ to 1625 cm$^{-1}$ or an integral area of a peak within the range of 1630 cm$^{-1}$ to 1640 cm$^{-1}$, as determined by Fourier transform infrared (FT-IR) analysis when the curing time of the gel polymer electrolyte is t minutes.

According to exemplary embodiments, the cross-linkable monomer may be included in an amount of 15 wt% or less, based on the total weight of the crosslinkable monomer and the polymerization product of the cross-linkable monomer.

According to exemplary embodiments, the crosslinkable monomer may include an acrylate-based compound having a functionality of 2 to 6.

According to exemplary embodiments, a ratio of a weight of the liquid electrolyte to a weight of the cross-linkable monomer may be 6 to 20.

According to exemplary embodiments, the liquid electrolyte may include a lithium salt and an organic solvent including ethylene carbonate.

According to exemplary embodiments, a content of ethylene carbonate may be 30 vol% to 70 vol% of a total volume of the organic solvent.

According to a method of preparing a secondary battery according to the present disclosure, a cathode, a separator, and an anode are sequentially stacked to prepare a stacked body. The stacked body is housed in an outer case and a composition for a gel polymer electrolyte including a cross-linkable monomer, a thermal initiator, and a liquid electrolyte is injected to prepare a preliminary secondary battery. The preliminary secondary battery is thermally cured for 30 minutes to 150 minutes to form a gel polymer electrolyte.

According to exemplary embodiments, the thermal curing treatment may be performed for 40 minutes to 120 minutes.

According to exemplary embodiments, the thermal curing treatment may be performed at a temperature of 50°C to 100°C.

According to exemplary embodiments, a ratio of a weight of the liquid electrolyte to a weight of the cross-linkable monomer may be 6 to 20.

According to exemplary embodiments, the thermal initiator may include at least one selected from the group consisting of t-butyl peroxy pivalate, azobisisobutyronitrile, and benzoyl peroxide.

According to exemplary embodiments, a content of the thermal initiator may be 0.1 parts by weight to 3 parts by weight based on 100 parts by weight of the crosslinkable monomer.

According to exemplary embodiments, the liquid electrolyte may include a lithium salt and an organic solvent including ethylene carbonate, and a content of the ethylene carbonate may be 30 vol% to 70 vol% of a total volume of the organic solvent.

The secondary battery according to exemplary embodiments of the present disclosure may form a stable interfacial layer on the surface of the cathode during repeated charging and discharging, and crack formation in the cathode active material may be suppressed. Accordingly, side reactions with the electrolyte may be prevented, and the cycle life of the battery may be improved.

In addition, an amount of transition metal eluted from the cathode active material may be reduced. Accordingly, capacity degradation of the battery during repeated charging and discharging may be prevented.

The secondary battery according to exemplary embodiments of the present disclosure may include an appropriate amount of residual cross-linkable monomer. Accordingly, degradation of the battery properties due to decomposition products of the residual cross-linkable monomer during charging and discharging may be prevented, and a decrease in ionic conductivity may be inhibited due to the appropriate viscosity of the gel polymer electrolyte.

BRIEF DESCRIPTION OF THE DRAWINGS

The above and other objects, features and advantages of the present disclosure will be more clearly understood from the following detailed description taken in conjunction with the accompanying drawings, in which:

FIG. 1 is a schematic cross-sectional view illustrating a secondary battery according to an exemplary embodiment;

FIG. 2 is a graph showing results of the $^1$H NMR analysis of the examples, comparative examples, and reference examples;

FIG. 3 is an enlarged graph of the region from 5.8 ppm to 6.4 ppm in FIG. 2;

FIG. 4 is a graph showing results of FT-IR analysis of the examples, comparative examples, and reference examples;

FIG. 5 is an enlarged graph of the region from 900 $cm^{-1}$ to 1950 $cm^{-1}$ in FIG. 4;

FIG. 6 is an enlarged graph of the region from 1600 $cm^{-1}$ to 1680 $cm^{-1}$ in FIG. 4;

FIGS. 7 and 8 are the Nyquist plots obtained during charging and discharging from in-situ EIS analysis of the half-cells of Example 2 and Comparative Example 2, respectively;

FIG. 9 is a graph showing specific capacity-voltage profile of the half-cells of Example 2 and Comparative Example 2;

FIG. 10 is a graph comparing interfacial resistance as a function of voltage during formation charging and discharging of the half-cells of Example 2 and Comparative Example 2;

FIG. 11 is a graph showing results of a rate property evaluation of the batteries of Examples 1 and 2 and Comparative Example 2;

FIG. 12 is a graph showing discharge capacity and Coulombic efficiency as a function of the number of 1C/1C cycles from 3.0 V to 4.3 V of the batteries of Examples 1 and 2 and Comparative Example 2;

FIG. 13 is a graph showing discharge capacity and Coulombic efficiency as a function of the number of cycles up to 60 in the charge and discharge operating voltage range of 3.0 to 4.4 V of the batteries of Example 2 and Comparative Example 2;

FIG. 14 is a voltage graph at the 50% state of charge (SOC) point at 1, 50, 100, and 150 cycles of the batteries of Examples 1 and 2 and Comparative Example 2;

FIG. 15 is a graph showing discharge capacity and Coulombic efficiencyas a function of the number of 2C/2C cycles of the batteries of Example 2 and Comparative Example 2;

FIG. 16 is a graph showing discharge capacity and Coulombic efficiency as a function of the number of 0.5C/0.5C cycles of the battery of Example 3;

FIG. 17 is a graph showing discharge capacity and Coulombic efficiency as a function of the number of 0.5C/0.5C cycles of the battery of Example 4;

FIG. 18 is a graph showing the Nyquist plots of the batteries of Example 2 and Comparative Example 2 at the initial and after 10 cycles;

FIGS. 19 to 21 are the XPS spectra of C 1s, F 1s, and Ni 2p, respectively, of the cathodes of Example 2 and Comparative Example 2 after charging and discharging;

FIG. 22 is profiles of XPS depth of the cathodes of Example 2 and Comparative Example 2 after charging and discharging;

FIG. 23 is 3D schematic diagrams of TOF-SIMS of the cathodes of Example 2 and Comparative Example 2 after charging and discharging;

FIGS. 24 and 25 are normalized TOF-SIMS depth profiles of the cathodes of Example 2 and Comparative Example 2, respectively, after charging and discharging;

FIG. 26 is a $NiF_3^-$ 2D mapping image of surface TOF-SIMS of the cathodes of Example 2 and Comparative Example 2 after charging and discharging;

FIGS. 27 and 28 are HR-TEM images of the cathode active materials of Comparative Example 2 and Example 2, respectively, after charging and discharging;

FIGS. 29 and 30 are cross-sectional SEM images of the cathode active materials of Comparative Example 2 and Example 2, respectively, after charging and, respectively; and

FIG. 31 is a graph showing an amount of transition metal deposition on a surface of the lithium metal anodes of Example 2 and Comparative Example 2 after charging and discharging.

DETAILED DESCRIPTION

The present disclosure provides a secondary battery including a gel polymer electrolyte. The present disclosure also provides a method of manufacturing the secondary battery. The secondary battery according to the present disclosure includes a cathode, an anode facing the cathode, and a gel polymer electrolyte including a cross-linkable monomer, a polymerization product of the cross-linkable monomer, and a liquid electrolyte. A conversion rate of the cross-linkable monomer is 85% or more.

According to exemplary embodiments, the conversion rate of the cross-linkable monomer may be 88% or more.

For example, when the conversion rate of the cross-linkable monomer is less than 85%, decomposition byproducts of the solvent and monomer due to a residual monomer may increase, and a cross-linking agent having a higher HOMO level than the solvent may be relatively more decomposed.

In some embodiments, the conversion rate of the cross-linkable monomer may be less than 100%, 99% or less, or 98% or less.

In some embodiments, the conversion rate of the cross-linkable monomer may be 88% to 98%, 90% to 99%, 90% to 98%, 92% to 99%, or 92% to 98%. Within this range, the residual cross-linkable monomer may be reduced to suppress the occurrence of side reactions, and a stable LiF layer may be formed on the surface of the cathode, thereby improving both life properties and capacity properties.

According to exemplary embodiments, the conversion rate of the cross-linkable monomer may be defined by Equation 1 below.

[Equation 1]

$$\text{Conversion rate (\%)} = \left\{1 - \frac{1}{3} \times \left(\frac{I_t^1}{I_0^1} + \frac{I_t^2}{I_0^2} + \frac{I_t^3}{I_0^3}\right)\right\} \times 100$$

In Equation 1, the secondary battery may be prepared from a preliminary secondary battery including a cathode, an anode, and a composition for a gel polymer electrolyte including the crosslinkable monomer and the liquid electrolyte.

According to $^1$H NMR analysis of the composition for the gel polymer electrolyte and the gel polymer electrolyte, at least one first peak within a range of 6.25 ppm to 6.4 ppm, at least one second peak within a range of 6 ppm or more and less than 6.25 ppm, at least one third peak within a range of 5.5 ppm or more and less than 6 ppm, and at least one fourth peak within a range of 4 ppm to 5 ppm may be observed, respectively.

$I_0^1$ is a ratio of an integral area of the first peak to an integral area of the fourth peak before curing of the composition for the gel polymer electrolyte. $I_0^2$ is a ratio of an integral area of the second peak to the integral area of the fourth peak before curing of the composition for the gel polymer electrolyte. $I_0^3$ is a ratio of an integral area of the third peak to the integral area of the fourth peak before curing of the composition for the gel polymer electrolyte.

$I_t^1$ is a ratio of an integral area of the first peak to an integral area of the fourth peak when the curing time of the gel polymer electrolyte is t minutes. $I_t^2$ is a ratio of an integral area of the second peak to the integral area of the fourth peak when the curing time of the gel polymer electrolyte is t minutes. and $I_t^3$ is a ratio of an integral area of the third peak to the integral area of the fourth peak when the curing time of the gel polymer electrolyte is t minutes.

According to exemplary embodiments, the conversion rate of the cross-linkable monomer may be defined by Equation 2 below.

[Equation 2]

$$\text{Conversion rate (\%)} = \left(1 - \frac{A_{C=C,t}/A_{ref,t}}{A_{C=C,0}/A_{ref,0}}\right) \times 100$$

In Equation 2, the secondary battery may be prepared from a preliminary secondary battery including a cathode, an anode, and a composition for a gel polymer electrolyte including the crosslinkable monomer and the liquid electrolyte.

$A_{ref,0}$ is an integral area of a peak within the range of 1800 cm$^{-1}$ to 1810 cm$^{-1}$ or an integral area of a peak within the range of 1065 cm$^{-1}$ to 1075 cm$^{-1}$, as determined by Fourier transform infrared (FT-IR) analysis before curing the composition for the gel polymer electrolyte.

$A_{c=c,0}$ is an integral area of a peak within the range of 1615 cm$^{-1}$ to 1625 cm$^{-1}$ or an integral area of a peak within the range of 1630 cm$^{-1}$ to 1640 cm$^{-1}$, as determined by Fourier transform infrared (FT-IR) analysis before curing the composition for the gel polymer electrolyte.

$A_{ref,t}$ is an integral area of a peak within the range of 1800 cm$^{-1}$ to 1810 cm$^{-1}$ or an integral area of a peak within the range of 1065 cm$^{-1}$ to 1075 cm$^{-1}$, as determined by Fourier transform infrared (FT-IR) analysis when the curing time of the gel polymer electrolyte is t minutes.

$A_{c=c,t}$ is an integral area of a peak within the range of 1615 cm$^{-1}$ to 1625 cm$^{-1}$ or an integral area of a peak within the range of 1630 cm$^{-1}$ to 1640 cm$^{-1}$, as determined by Fourier transform infrared (FT-IR) analysis when the curing time of the gel polymer electrolyte is t minutes.

According to exemplary embodiments, the cross-linkable monomer may be included in an amount of 15% by weight ("wt%") or less, based on the total weight of the cross-linkable monomer and the polymerization product of the cross-linkable monomer. For example, the cross-linkable monomer may be included in an amount of 12 wt% or less, 10 wt% or less, 5 wt% or less, 4 wt% or less, 3 wt% or less, 2 wt% or less, or 1 wt% or less, based on the total weight of the cross-linkable monomer and the polymerization product of the cross-linkable monomer. A lower limit of the content of the cross-linkable monomer may be, for example, 0 wt% or greater than 0 wt%.

Within the above range, the amount of residual crosslinkable monomer may decrease, side reactions may be suppressed, and a stable LiF layer may be formed on the surface of the cathode, thereby improving both life and capacity properties.

According to exemplary embodiments, the cross-linkable monomer may include an acrylate-based compound having a functionality of 2 to 6. For example, the cross-linkable monomer may include an acrylate-based compound having a fuctionality of 2, 3, or 4.

For example, the cross-linkable monomer may include ethylene glycol diacrylate, diethylene glycol diacrylate, triethylene glycol diacrylate, tetraethylene glycol diacrylate, 1,2-propanediol diacrylate, 1,3-propanediol diacrylate, dipropylene glycol diacrylate, tripropylene glycol diacrylate, neopentyl glycol diacrylate, neopentyl glycol ethoxylate diacrylate, 1,3-butanediol diacrylate, 1,4-butanediol diacrylate, 2-butene-1,4-diol diacrylate, 1,5-pentanediol diacrylate, 1,6-hexanediol diacrylate, 1,9-nonanediol diacrylate, 1,10-decanediol diacrylate, 1,4-cyclohexanedimethanol diacrylate, trimethylolpropane ethoxylate methyl ether diacrylate, hydroquinone diacrylate, trimethylolethane triacrylate, trimethylolpropane triacrylate, trimethylolpropane ethoxylate triacrylate, pentaerythritol triacrylate, pentaerythritol tetraacrylate, ditrimethylolpropane tetraacrylate, or ditrimethylolpropane hexaacrylate. According to exemplary embodiments, the liquid electrolyte may include a lithium salt and an organic solvent including ethylene carbonate.

For example, the lithium salt is represented by Li$^+$X$^-$, and as an anion (X$^-$) of the lithium salt, F$^-$, Cl$^-$, Br$^-$, I$^-$, NO$_3^-$, N(CN)$_2^-$, BF$_4^-$, ClO$_4^-$, PF$_6^-$, (CF$_3$)$_2$PF$_4^-$, (CF$_3$)$_3$PF$_3^-$, (CF$_3$)$_4$PF$_2^-$, (CF$_3$)$_5$PF$^-$, (CF$_3$)$_6$P$^-$, CF$_3$SO$_3^-$, CF$_3$CF$_2$SO$_3^-$, (CF$_3$SO$_2$)$_2$N$^-$, (FSO$_2$)$_2$N$^-$, CF$_3$CF$_2$(CF$_3$)$_2$CO$^-$, (CF$_3$SO$_2$)$_2$CH$^-$, (SF$_5$)$_3$C$^-$, (CF$_3$SO$_2$)$_3$C$^-$, CF$_3$(CF$_2$)$_7$SO$_3^-$, CF$_3$CO$_2^-$, CH$_3$CO$_2^-$, SCN$^-$ and (CF$_3$CF$_2$SO$_2$)$_2$N$^-$, etc. may be exemplified.

For example, as the organic solvent, propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulfolane, $\gamma$-butyrolactone, propylene sulfite, and tetrahydrofuran, and the like may be used. These may be used singly or in a combination of two or more thereof.

According to the method of preparing a secondary battery according to the present disclosure, a cathode, a separator, and an anode may be sequentially stacked to prepare a stack body. The stack body may be housed in an outer case, and a composition for a gel polymer electrolyte including a cross-linkable monomer, a thermal initiator, and a liquid electrolyte may be injected to prepare a preliminary secondary battery. The method may include a step of forming a gel polymer electrolyte by thermally curing the preliminary secondary battery for 30 to 150 minutes to form a gel polymer electrolyte.

According to exemplary embodiments, the composition for gel polymer electrolyte may be prepared by mixing the above-described liquid electrolyte and the cross-linkable monomer in a mass ratio of (80 to 97):(3 to 20) and stirring for 1 to 12 hours, and adding a thermal initiator in an amount of 0.1 to 3 parts by weight based on 100 parts by weight of the cross-linkable monomer and stirring.

According to exemplary embodiments, the thermal curing treatment may be performed for 40 minutes to 120 minutes. For example, the thermal curing treatment may be performed for 50 minutes to 110 minutes, or 60 minutes to 90 minutes.

Within the above range, the cross-linkable monomer may form a gel polymer electrolyte at the desired conversion rate, thereby suppressing the formation of a CEI having non-uniform and high resistance due to oxidation of residual monomer on the surface of the cathode.

According to exemplary embodiments, the thermal curing treatment may be performed at a temperature of 50 °C to 100 °C. For example, the thermal curing treatment may be performed at a temperature of 55 °C to 90 °C, or 60 °C to 80 °C.

Within the above range, energy required for the cross-linkable monomer to be converted into a gel polymer electrolyte may be provided, thereby improving electrochemical performance such as ionic conductivity and reversible discharge capacity of the secondary battery.

According to exemplary embodiments, a ratio of a weight of the liquid electrolyte to a weight of the monomer may be 6 to 20. For example, the ratio of the weight of the liquid electrolyte to the weight of the monomer may be 8 to 20, 10 to 18, or 12 to 16.

Within the above range, cracking of particles due to a local volume change of a cathode active material caused by intercalation and deintercalation of lithium ions of the cathode active material during repeated charging and discharging may be suppressed.

According to exemplary embodiments, the thermal initiator may include at least one selected from the group consisting of t-butyl peroxy pivalate, azobisisobutyronitrile, and benzoyl peroxide.

According to exemplary embodiments, a content of the thermal initiator may be 0.1 to 3 parts by weight based on 100 parts by weight of the crosslinkable monomer. For example, the content of the thermal initiator may be 0.5 to 2.5 parts by weight, or 0.5 to 2 parts by weight, based on 100 parts by weight of the cross-linkable monomer.

Within the above range, a radical may be generated in the cross-linkable monomer so that a reaction may be sufficiently initiated.

According to exemplary embodiments, the liquid electrolyte may include a lithium salt and an organic solvent including ethylene carbonate.

For example, the lithium salt is represented by $Li^+X^-$, and as an anion $(X^-)$ of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

For example, the organic solvent may include propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulfolane, $\gamma$-butyrolactone, propylene sulfite, and tetrahydrofuran. These may be used singly or in combination of two or more thereof.

According to exemplary embodiments, the content of ethylene carbonate in the total volume of the organic solvent may be 30% by volume ("vol%") to 70 vol%. For example, the content of ethylene carbonate in the total volume of the organic solvent may be 40 vol% to 60 vol%. Within the above range, a inversion of a concentration ratio between C and F may occur on a surface of the cathode at a sputtering time of less than 120 seconds.

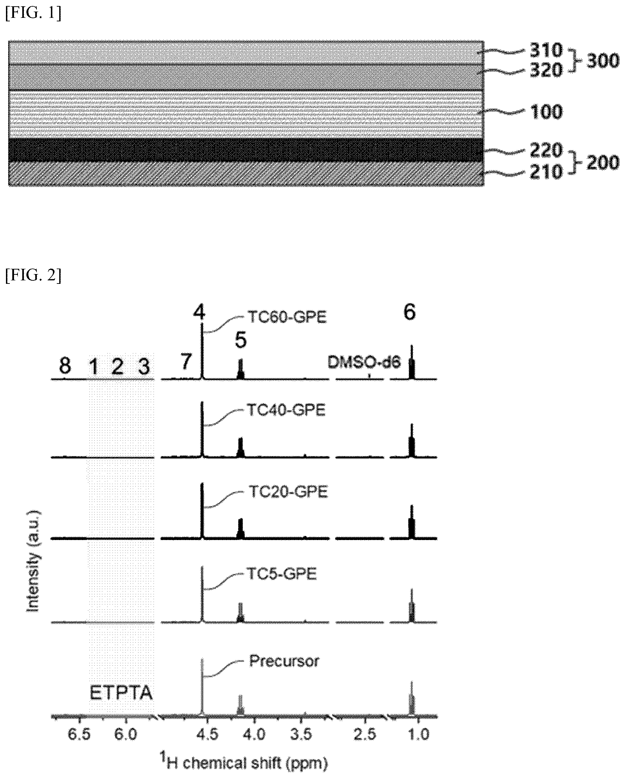

FIG. 1 is a schematic cross-sectional view illustrating a secondary battery according to an exemplary embodiment.

Referring to FIG. 1, a secondary battery may include a cathode 300, an anode 200 facing the cathode 300, and an electrolyte layer 100 disposed between the cathode 300 and the anode 200 and including the above-described gel polymer electrolyte.

The cathode 300 may include a cathode current collector 310 and a cathode active material layer 320 disposed on at least one surface of the cathode current collector 310.

The cathode current collector 310 may include stainless steel, nickel, aluminum, titanium, or an alloy thereof. The cathode current collector 310 may also include aluminum or stainless steel having a surface treated with carbon, nickel, titanium, or silver. The cathode current collector may have a thickness of, for example, 10 $\mu$m to 50 $\mu$m.

The cathode active material layer 320 may include a cathode active material. The cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Chemical Formula 1 below.

[Chemical Formula 1] $\qquad$ $Li_xNi_aM_bO_{2+z}$

**In** Chemical Formula 1, x, a , b and z may satisfy $0.9 \leq x \leq 1.2$, $0.6 \leq a \leq 0.99$, $0.01 \leq b \leq 0.4$, and $-0.5 \leq z \leq 0.1$. As described above, M may include Co, Mn and/or Al.

The chemical structure represented by Chemical Formula 1 indicates a bonding relationship among elements included in the layered structure or the crystal structure of the cathode active material, and does not exclude the presence of additional elements. For example, M includes Co and/or Mn, and Co and/or Mn may be provided as main active elements of the cathode active material together with Ni. Here, it should be understood that Chemical Formula 1 is provided to express the bonding relationship between the main active elements, and is a formula encompassing the introduction and substitution of additional elements.

In one embodiment, the cathode active material may further include auxiliary elements which are added to the

**EP 4 769 613 A1**

main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Chemical Formula 1.

**The** auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may serve as an auxiliary active element that contributes to the capacity/output activity of the cathode active material together with Co or Mn, such as Al.

For example, the cathode active material or the lithium-nickel metal oxide may include a layered structure or a crystal structure represented by Chemical Formula 1-1 below.

$$[\text{Chemical Formula 1-1}] \qquad Li_xNi_aM1_bM2_cO_{2+z}$$

In Chemical Formula 1-1, M1 may include Co, Mn and/or Al. M2 may include the above-described auxiliary elements. In Chemical Formula 1-1, x, a, b, c and z may satisfy $0.9 \leq x \leq 1.2$, $0.6 \leq a \leq 0.99$, $0.01 \leq b+c \leq 0.4$, and $-0.5 \leq z \leq 0.1$.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may be present on the surface of lithium-nickel metal oxide particles, or may penetrate through the surface of the lithium-nickel metal oxide particles to be incorporated into the bonding structure represented by Chemical Formula 1 or Chemical Formula 1-1 above.

The cathode active material may include a nickel-cobalt-manganese (NCM)-based lithium oxide. In this case, an NCM-based lithium oxide having an increased content of nickel may be used.

**Nickel** (Ni) may serve as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

However, as the content of Ni increases, the long-term storage stability and cycle life stability of the cathode or the secondary battery may be relatively reduced, and side reactions with the electrolyte may also increase. Nevertheless, according to exemplary embodiments, by including Co, the cycle life stability and capacity retention properties may be improved by Mn, while electrical conductivity is maintained.

**The** content of Ni (e.g., the molar fraction of nickel based on the total molar amount of nickel, cobalt and manganese) in the NCM-based lithium oxide may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the cathode active material may include, for example, a manganese (Mn)-rich active material, a lithium (Li)-rich layered oxide (LLO)/over-lithiated oxide (OLO)-based active material, or a cobalt (Co)-less active material, which has a chemical structure or a crystal structure represented by Chemical Formula 2 below.

$$[\text{Chemical Formula 2}] \qquad p[Li_2MnO_3]\cdot(1-p)[Li_qJO_2]$$

In Chemical Formula 2, p and q may satisfy $0 < p < 1$, and $0.9 \leq q \leq 1.2$, and J may include at least one element selected from Mn, Ni, Co, Fe, Cr, V, Cu, Zn, Ti, Al, Mg and B.

For example, a cathode slurry may be prepared by mixing a solvent and the cathode active material. The cathode slurry may be coated on the cathode current collector 310, followed by drying and roll-pressing to prepare the cathode active material layer 320. The coating process may be performed using methods such as gravure coating, slot die coating, simultaneous multilayer die coating, imprinting, doctor blade coating, dip coating, bar coating or casting, etc., but is not limited thereto. The cathode active material layer may further include a binder and optionally may further include a conductive material, a thickener or the like.

Non-limiting examples of the solvent used in the preparation of the cathode slurry may include N-methyl-2-pyrrolidone (NMP), dimethylformamide, dimethylacetamide, N,N-dimethylaminopropylamine, ethylene oxide, tetrahydrofuran or the like.

The binder may include polyvinylidene fluoride (PVDF), poly(vinylidene fluoride-cohexafluoropropylene), polyacrylonitrile, polymethyl methacrylate, acrylonitrile butadiene rubber (NBR), poly(butadiene) rubber (BR), styrene-butadiene rubber (SBR) and the like. In one embodiment, a PVDF-based binder may be used as the cathode binder.

The conductive material may be added to the cathode active material layer to enhance the conductivity thereof and/or the mobility of lithium ions or electrons. For example, the conductive material may include carbon-based conductive materials such as graphite, carbon black, acetylene black, Ketjen black, graphene, carbon nanotubes, vapor-grown carbon fibers (VGCF), and carbon fibers; and/or metal-based conductive materials such as tin, tin oxide, and titanium oxide; as well as perovskite materials such as $LaSrCoO_3$, and $LaSrMnO_3$, but is not limited thereto.

The cathode slurry may further include a thickener and/or a dispersant, as needed. In one embodiment, the cathode slurry may include a thickener such as carboxymethyl cellulose (CMC).

The anode 200 may include an anode current collector 210 and an anode active material layer 220 disposed on at least one surface of the anode current collector 210.

The anode current collector 210 may include, for example, a copper foil, nickel foil, stainless steel foil, titanium foil, nickel foam, copper foam, or a polymer substrate coated with a conductive metal. The anode current collector 210 may have a thickness of, for example, 10 $\mu$m to 50 $\mu$m, but is not limited thereto.

The anode current collector 210 is not an essential component, and the anode 200 may include only the anode active material layer 220 without the anode current collector 210.

The anode active material layer 220 may include an anode active material. As the anode active material, a material capable of adsorbing and desorbing lithium ions may be used. For example, as the anode active material, carbon-based materials such as crystalline carbon, amorphous carbon, carbon composites, or carbon fibers, etc.; lithium metal; a lithium alloy; a silicon (Si)-containing material or a tin (Sn)-containing material may be used.

Examples of the amorphous carbon may include hard carbon, soft carbon, coke, mesocarbon microbead (MCMB), mesophase pitch-based carbon fiber (MPCF) or the like.

Examples of the crystalline carbon may include graphite-based carbon such as natural graphite, artificial graphite, graphitized coke, graphitized MCMB, graphitized MPCF or the like.

The lithium metal may include pure lithium metal or lithium metal having a protective layer formed thereon for suppressing dendrite growth, etc. In one embodiment, a lithium metalcontaining layer deposited or coated on the anode current collector may be used as the anode active material layer. In one embodiment, a lithium thin-film layer may be used as the anode active material layer.

Elements included in the lithium alloy may include aluminum, zinc, bismuth, cadmium, antimony, silicon, lead, tin, gallium or indium, etc.

The silicon-containing material may provide further increased capacity characteristics. The silicon-containing material may include Si, $SiO_x$ (0<x<2), a metal-doped $SiO_x$ (0<x<2), a silicon-carbon composite, etc. The metal may include lithium and/or magnesium, and the metal-doped $SiO_x$ (0<x<2) may include a metal silicate.

For example, an anode slurry may be prepared by mixing the anode active material in a solvent. The anode slurry may be coated or deposited onto the anode current collector, and then dried and roll-pressed to prepare the anode active material layer 220. The coating process may be performed using substantially the same method as the method of preparing the cathode active material layer 320. The anode active material layer 220 may further include a binder, and optionally may further include an electrolyte, a conductive material, a thickener, etc.

In some embodiments, the anode 200 may include the anode active material layer in the form of a lithium metal formed through a deposition/coating process.

The solvent for the anode active material layer may include, for example, water, purified water, deionized water, distilled water, ethanol, isopropanol, methanol, acetone, n-propanol, t-butanol, etc.

The above-described materials that can be used when preparing the cathode as the binder, conductive material and thickener may also be used for the anode.

In some embodiments, a styrene-butadiene rubber-based binder, carboxymethyl cellulose, polyacrylic acid-based binder, poly(3,4-ethylenedioxythiophene) (PEDOT)-based binder, and the like may be used as an anode binder.

In some embodiments, the electrolyte layer 100 may be interposed between the cathode 300 and the anode 200 within the electrode assembly. For example, an electrode cell may be defined by the cathode 300, the anode 200 and the electrolyte layer 100, and a plurality of the electrode cells may be stacked to form an electrode assembly. For example, the electrode assembly may be formed by winding, stacking, folding or the like.

For example, a separator may be interposed between the cathode 300 and the anode 200 to space apart the electrodes. The above-described composition for a gel polymer electrolyte may be filled in the space between the cathode 300 and the anode 200 and cured to form the electrolyte layer 100.

For example, the separator may include a porous polymer film made of a polyolefin polymer such as an ethylene homopolymer, a propylene homopolymer, an ethylene/butene copolymer, an ethylene/hexene copolymer, or an ethylene/methacrylate copolymer. The separator may also include a nonwoven fabric made of glass fibers having a high melting point, polyethylene terephthalate fibers or the like.

For example, the electrolyte layer 100 disposed between the cathode 300 and the anode 200 may include a porous substrate and a gel polymer electrolyte disposed in the pores of the porous substrate.

For example, electrode tabs (cathode tabs and anode tabs) may protrude from the cathode current collector and the anode current collector, respectively, and may extend to one side of the case. The electrode tabs may be welded together with the one side of the case and connected to electrode leads (a cathode lead and an anode lead) that extend to or are exposed outside the case.

For example, a pouch-type case, a prismatic case, a cylindrical case, or a coin-type case may be used. The invention relates also to the following numbered aspects:

Aspect 1. A secondary battery comprising:

a cathode;
an anode facing the cathode; and
a gel polymer electrolyte including a cross-linkable monomer, a polymerization product of the crosslinkable monomer, and a liquid electrolyte,
wherein a conversion rate of the cross-linkable monomer is 85% or more.

Aspect 2. The secondary battery according to aspect 1, wherein the conversion rate of the cross-linkable monomer is 88% or more.

Aspect 3. The secondary battery according to aspect 1 or aspect 2, wherein the conversion rate of the cross-linkable monomer is defined by Equation 1 below:

[Equation 1]

$$\text{Conversion rate (\%)} = \left\{1 - \frac{1}{3} \times \left(\frac{I_t^1}{I_0^1} + \frac{I_t^2}{I_0^2} + \frac{I_t^3}{I_0^3}\right)\right\} \times 100$$

wherein, in Equation 1, the secondary battery is prepared from a preliminary secondary battery comprising a cathode, an anode, and a composition for a gel polymer electrolyte including the cross-linkable monomer and the liquid electrolyte,

according to $^1$H NMR analysis of the composition for the gel polymer electrolyte and the gel polymer electrolyte, at least one first peak within a range of 6.25 ppm to 6.4 ppm; at least one second peak within a range of 6 ppm or more and less than 6.25 ppm; at least one third peak within a range of 5.5 ppm or more and less than 6 ppm; and at least one fourth peak within a range of 4 ppm to 5 ppm are observed, respectively,
$I_0^1$ is a ratio of an integral area of the first peak to an integral area of the fourth peak before curing of the composition for the gel polymer electrolyte, $I_0^2$ is a ratio of an integral area of the second peak to the integral area of the fourth peak before curing of the composition for the gel polymer electrolyte, and $I_0^3$ is a ratio of an integral area of the third peak to the integral area of the fourth peak before curing of the composition for the gel polymer electrolyte, and $I_t^1$ is a ratio of an integral area of the first peak to an integral area of the fourth peak when the curing time of the gel polymer electrolyte is t minutes, $I_t^2$ is a ratio of an integral area of the second peak to the integral area of the fourth peak when the curing time of the gel polymer electrolyte is t minutes, and $I_t^3$ is a ratio of an integral area of the third peak to the integral area of the fourth peak when the curing time of the gel polymer electrolyte is t minutes.

Aspect 4. The secondary battery according to any one of aspects 1 to 3, wherein the conversion rate of the cross-linkable monomer is defined by Equation 2 below:

[Equation 2]

$$\text{Conversion rate (\%)} = \left(1 - \frac{A_{C=C,t}/A_{ref,t}}{A_{C=C,0}/A_{ref,0}}\right) \times 100$$

wherein, in Equation 2, the secondary battery is prepared from a preliminary secondary battery comprising a cathode, an anode, and a composition for a gel polymer electrolyte including the cross-linkable monomer and the liquid electrolyte,

$A_{ref,0}$ is an integral area of a peak within the range of 1800 cm$^{-1}$ to 1810 cm$^{-1}$ or an integral area of a peak within the range of 1065 cm$^{-1}$ to 1075 cm$^{-1}$, as determined by Fourier transform infrared (FT-IR) analysis before curing the composition for the gel polymer electrolyte,
$A_{c=c,0}$ is an integral area of a peak within the range of 1615 cm$^{-1}$ to 1625 cm$^{-1}$ or an integral area of a peak within the range of 1630 cm$^{-1}$ to 1640 cm$^{-1}$, as determined by Fourier transform infrared (FT-IR) analysis before curing the composition for the gel polymer electrolyte,

$A_{ref,t}$ is an integral area of a peak within the range of 1800 cm$^{-1}$ to 1810 cm$^{-1}$ or an integral area of a peak within the range of 1065 cm$^{-1}$ to 1075 cm$^{-1}$, as determined by Fourier transform infrared (FT-IR) analysis when the curing time of the gel polymer electrolyte is t minutes, and

$A_{c=c,t}$ is an integral area of a peak within the range of 1615 cm$^{-1}$ to 1625 cm$^{-1}$ or an integral area of a peak within the range of 1630 cm$^{-1}$ to 1640 cm$^{-1}$, as determined by Fourier transform infrared (FT-IR) analysis when the curing time of the gel polymer electrolyte is t minutes.

Aspect 5. The secondary battery according to any one of aspects 1 to 4, wherein the cross-linkable monomer is included in an amount of 15 wt% or less, based on the total weight of the cross-linkable monomer and the polymerization product of the cross-linkable monomer.

Aspect 6. The secondary battery according to any one of aspects 1 to 5, wherein the cross-linkable monomer comprises an acrylate-based compound having a functionality of 2 to 6.

Aspect 7. The secondary battery according to any one of aspects 1 to 6, wherein a ratio of a weight of the liquid electrolyte to a weight of the cross-linkable monomer is 6 to 20.

Aspect 8. The secondary battery according to any one of aspects 1 to 7, wherein the liquid electrolyte comprises a lithium salt and an organic solvent including ethylene carbonate.

Aspect 9. A method of preparing a secondary battery, comprising:

sequentially stacking a cathode, a separator, and an anode to prepare a stacked body;
housing the stacked body in an outer case and injecting a composition for a gel polymer electrolyte comprising a cross-linkable monomer, a thermal initiator, and a liquid electrolyte to prepare a preliminary secondary battery; and
thermally curing the preliminary secondary battery for 30 minutes to 150 minutes to form a gel polymer electrolyte.

Aspect 10. The method according to aspect 9, wherein the thermal curing treatment is performed for 40 minutes to 120 minutes.

Aspect 11. The method according to aspect 9 or aspect 10, wherein the thermal curing treatment is performed at a temperature of 50°C to 100°C.

Aspect 12. The method according to any one of aspects 9 to 11, wherein a ratio of a weight of the liquid electrolyte to a weight of the cross-linkable monomer is 6 to 20.

Aspect 13. The method according to any one of aspects 9 to 12, wherein the thermal initiator comprises at least one selected from the group consisting of t-butyl peroxy pivalate, azobisisobutyronitrile, and benzoyl peroxide.

Aspect 14. The method according to any one of aspects 9 to 13, wherein a content of the thermal initiator is 0.1 parts by weight to 3 parts by weight based on 100 parts by weight of the crosslinkable monomer.

Aspect 15. The method according to any one of aspects 9 to 14, wherein the liquid electrolyte comprises a lithium salt and an organic solvent comprising ethylene carbonate, and a content of the ethylene carbonate is 30 vol% to 70% of a total volume of the organic solvent.

## Used Materials

The cathode active material, NCM712, and the anode active material, graphite, were purchased from L&F Co. and Posco Co., respectively. Carbon black (Super-P) was purchased from Timcal Ltd. Polyvinylidene fluoride (PVDF, HSV-900) was purchased from Arkema Inc. (Kynar). Li metal foil (thickness: 300 μm), used as the reference and counter electrodes, was purchased from Honjo Metal Co. N-methyl-2-pyrrolidone (NMP, anhydrous, 99.5%) and the cross-linkable monomer, trimethylolpropane ethoxylate triacrylate (ETPTA, number-average molecular weight of 428 or less), were purchased from Sigma-Aldrich Co. t-butyl peroxy pivalate (TBPP, thermal initiator) was purchased from Arkema Inc.

The liquid electrolyte (ethylene carbonate (EC): diethyl carbonate (DEC) = 1:1 (v/v) and 10 wt% fluoroethylene carbonate (FEC) with 1 M LiPF$_6$) was purchased from Soulbrain Co.

Acetone (ACS reagent, 99.5%), acetonitrile (anhydrous, 99.8%), N,N-dimethylformamide (anhydrous, 99.8%), dimethyl sulfoxide (anhydrous, 99.9%), and dimethyl carbonate (anhydrous, 99%) were purchased from Sigma-Aldrich Co.

## Example 1: TC40-GPE

The following entire process was performed in an argon-filled glove box.

The liquid electrolyte and ETPTA were mixed at a mass ratio of 95:5 and stirred for 3 hours or more. TBPP, a thermal initiator, was added and stirred to prepare a composition for a gel polymer electrolyte. TBPP was used in an amount of 1 part by weight based on 100 parts by weight of ETPTA.

**NCM712,** carbon black (Super-P), and PVDF were mixed at a weight ratio of 90:5:5 and added to N-methyl-2-pyrrolidone (NMP). The mixture was then stirred at 2000 rpm for 25 minutes using a Thinky mixer (AR-100, Thinky USA) to prepare a cathode slurry.

The cathode slurry was coated on one surface of an aluminum foil, dried in a vacuum oven at 110 °C for 8 hours, and roll-pressed to form a cathode active material layer. The cathode active material layer had a capacity per area of 1.5 $mAh/cm^2$ and a loading amount of 7.7 $mg/cm^2$.

To manufacture a secondary battery, an anode was prepared using the following method. A graphite, carbon black (Super-P), and PVDF were mixed at a weight ratio of 95:1:4 and added to NMP. The mixture was then stirred using a Thinky mixer at 2000 rpm for 25 minutes to prepare an anode slurry. The anode slurry was coated on one surface of a copper foil, dried, and roll-pressed under the same conditions as in the preparation of the cathode to form an anode active material layer. The anode active material layer had a capacity per area of 1.65 $mAh/cm^2$ and a loading of 4.73 $mg/cm^2$.

Additionally, Li metal foil (thickness: 300 $\mu$m) was used to manufacture a half-cell.

A polyethylene separator (thickness: 16 $\mu$m) was interposed between the cathode and anode to form a stacked body. The stacked body was inserted into a coin cell case, and 110 $\mu$L of the composition for a gel polymer electrolyte was injected. The stacked body was aged for several hours to prepare a preliminary half-cell or a preliminary secondary battery.

The preliminary half-cell or the preliminary secondary battery was thermally cured at 70 °C for 40 minutes in a Vulcan furnace (VULCAN 3-550) to prepare a half-cell or a preliminary secondary battery.

Example 2: TC60-GPE

A half-cell or a secondary battery was prepared in the same manner as in Example 1, except that thermal curing was performed for 60 minutes.

Example 3: TC90-GPE

A half-cell or a secondary battery was prepared in the same manner as in Example 1, except that thermal curing was performed for 90 minutes.

**Example** 4: **TC120-GPE**

A half-cell or a secondary battery was prepared in the same manner as in Example 1, except that thermal curing was performed for 120 minutes.

Comparative Example 1: TC5-GPE

A half-cell or a secondary battery was prepared in the same manner as in Example 1, except that thermal curing was performed for 5 minutes.

Comparative Example 2: TC20-GPE

A half-cell or a secondary battery was prepared in the same manner as in Example 1, except that thermal curing was performed for 20 minutes.

**Reference Example: Precursor**

The preliminary secondary battery of Example 1 was used.

**Measurement Example 1: Conversion rate of cross-linkable monomer**

(1) $^1$H NMR analysis

$^1$H NMR analysis was performed on the composition for a gel polymer electrolyte of the reference example, and the gel polymer electrolytes of the examples and comparative examples before cell assembly.

Specifically, the cured gel polymer electrolytes of the examples and comparative examples before cell assembly were cut, and pulverized, mixed with dimethyl sulfoxide (DMSO) using a vortex mixer, and ultrasonicated to prepare a dispersion. The dispersion was centrifuged and filtered through a PTFE syringe filter, and the obtained sample was

analyzed using a $^1$H NMR spectrometer (Avance III HD 400, Bruker). The composition for a gel polymer electrolyte of the reference example was prepared in the same manner as the samples of the examples, except that it was not pulverized.

FIG. 2 is a graph showing results of the $^1$H NMR analysis of the examples, comparative examples, and reference examples.

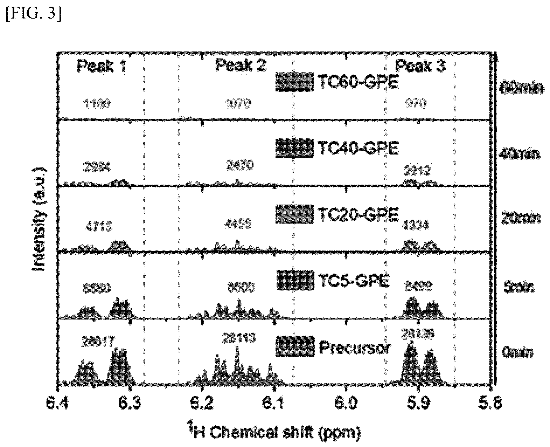

FIG. 3 is an enlarged graph of the region from 5.8 ppm to 6.4 ppm in FIG. 2.

The conversion rate of the cross-linkable monomer was calculated according to Equation 1 from the $^1$H NMR analysis results of the examples, comparative examples, and the reference example.

(2) FT-IR Analysis

FT-IR analysis was performed on the composition for a gel polymer electrolyte of the reference example and the gel polymer electrolytes of the examples and comparative examples before cell assembly.

Specifically, the gel polymer electrolytes of the examples and comparative examples and the composition for a gel polymer electrolyte of the reference example were analyzed using an FT-IR spectrometer (Vertex 70, Bruker, 4000-500 $cm^{-1}$).

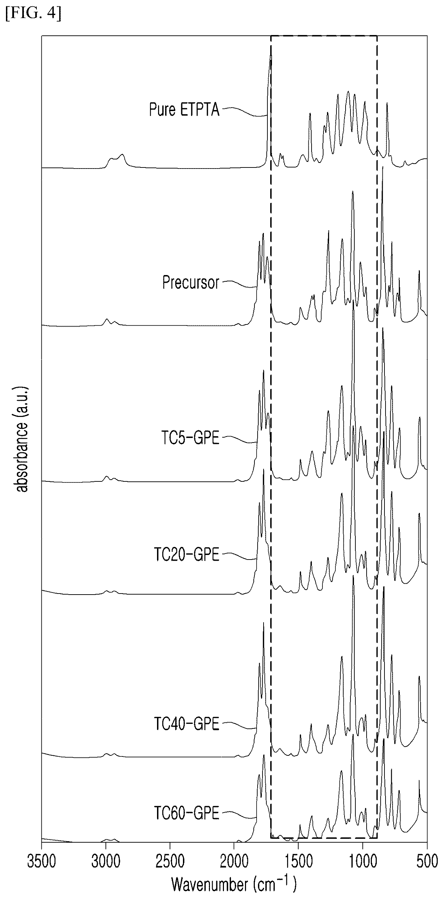

FIG. 4 is a graph showing results of FT-IR analysis of the examples, comparative examples, and reference examples.

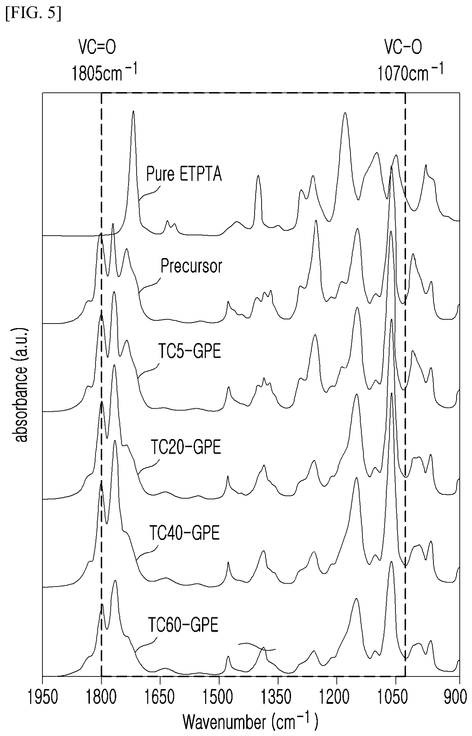

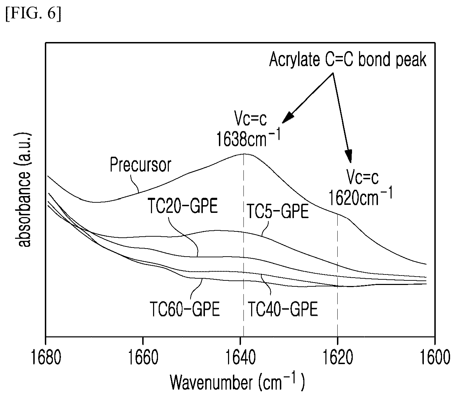

FIG. 5 is an enlarged graph of the region from 900 $cm^{-1}$ to 1950 $cm^{-1}$ in FIG. 4, and FIG. 6 an enlarged graph of the region from 1600 $cm^{-1}$ to 1680 $cm^{-1}$ in FIG. 4.

The conversion rate of the cross-linkable monomer was calculated according to Equation 2 from the FT-IR analysis results of the examples, comparative examples, and the reference example.

Table 1 below shows the conversion rates of the cross-linkable monomer calculated according to Equation 1 and Equation 2.

[TABLE 1]

|  | Equation 1 ($^1$H NMR) | Equation 2 (FT-IR) |
|---|---|---|
| Example 1 | 90.98 | 92.27 |
| Example 2 | 96.2 | 96.67 |
| Example 3 | 97.48 | 97.97 |
| Example 4 | 98.06 | 98.32 |
| Comparative Example 1 | 69.39 | 70.46 |
| Comparative Example 2 | 84.09 | 84.27 |

**Experimental Example 1: Evaluation of half-cell property**

(1) In-situ electrochemical impedance spectroscopy (in-situ EIS) analysis

In-situ EIS analysis was performed on the half-cells of Example 2 and Comparative Example 2 using an electrochemical workstation (ZIVE MP1, WonATech). The measurements were conducted over a frequency range of $10^{-1}$ Hz to $10^5$ Hz and a voltage range of 3.0 V to 4.3 V, with an AC amplitude of 10 mV and a charge/discharge current density of 0.1 C/0.1 C.

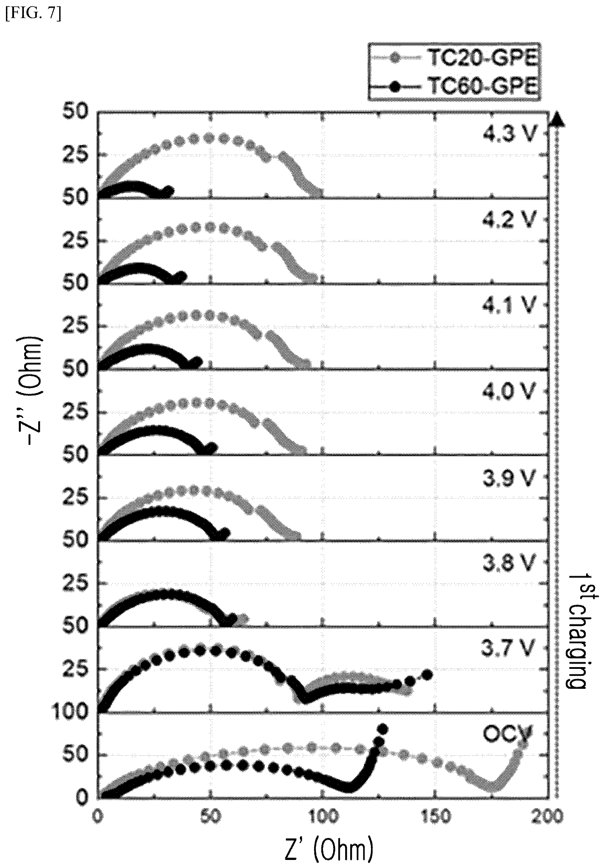

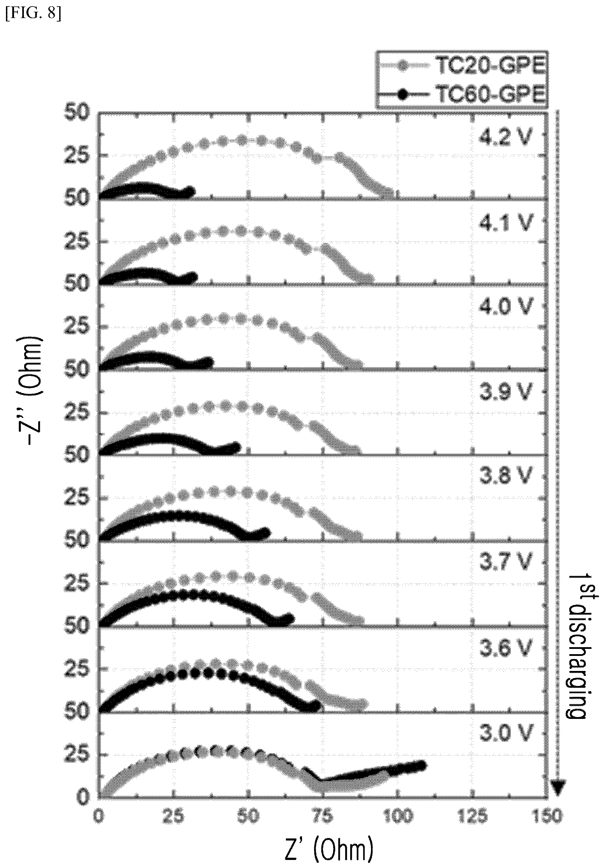

FIGS. 7 and 8 are the Nyquist plots obtained during charging and discharging from in-situ EIS analysis of the half-cells of Example 2 and Comparative Example 2, respectively.

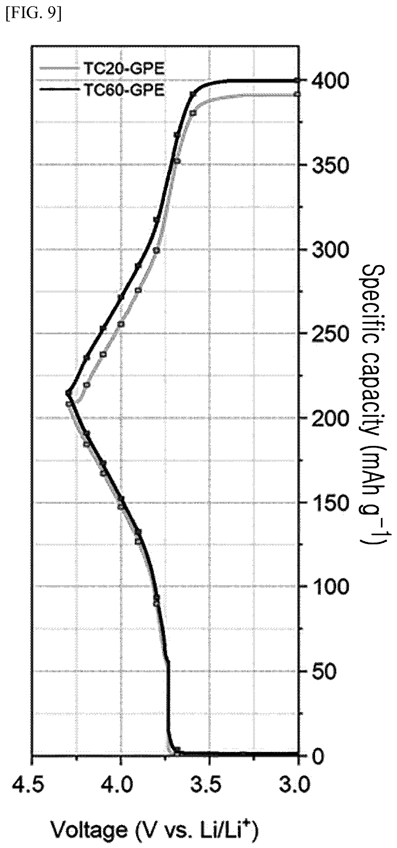

FIG. 9 is a graph showing specific capacity-voltage profiles of the half-cells of Example 2 and Comparative Example 2.

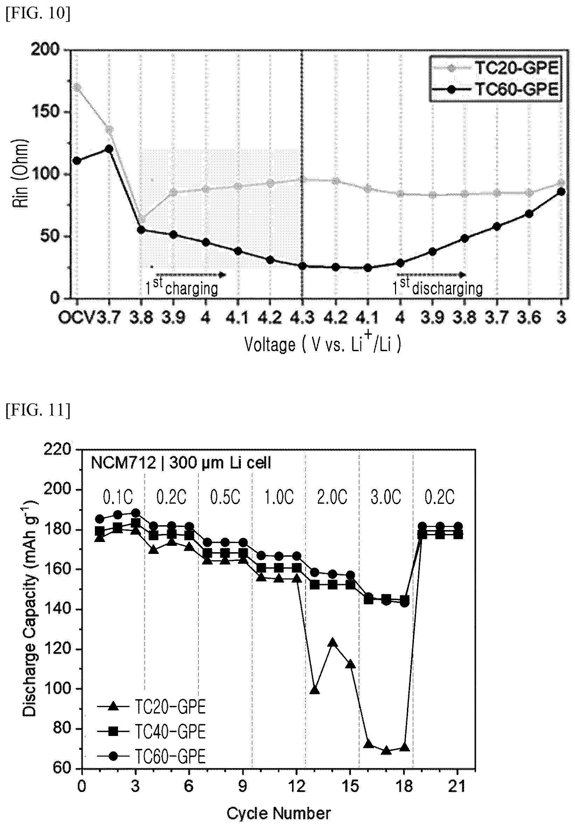

FIG. 10 is a graph comparing interfacial resistance as a function of voltage during formation charging and discharging of the half-cells of Example 2 and Comparative Example 2.

Referring to FIGS. 7 to 10, the battery of Example 2 exhibited higher charge and discharge capacities than that of Comparative Example 2. Although the viscosity of the gel polymer electrolyte of Comparative Example 2 was lower than that of the gel polymer electrolyte of Example 2, the battery of Comparative Example 2, which contained a relatively higher amount of unreacted cross-linkable monomer, showed higher interfacial resistance during the formation process. This resulted from local adsorption of the cross-linkable monomer onto the electrode and separator through non-uniform gelation in Comparative Example 2, even before repeated charging and discharging.

As charging progressed, the resistance of Comparative Example 2 began to increase at 3.8-3.9 V, but decreased in the initial state of charge (SOC).

This is attributed to the formation of a high-resistance heterogeneous layer due to oxidative decomposition of ETPTA, which mainly occurs at 3.8 V or higher during the formation process. The battery of Example 2 exhibited a tendency of decreasing and increasing interfacial resistance during the first charge and discharge processes, respectively. The reversible resistance change observed in the battery of Example 2 is interpreted to originate from diffusion-based (de) lithiation, rather than from the formation of an unstable CEI layer caused by oxidative decomposition of the cross-linkable monomer in the high-voltage range ($\geq$ 3.8 V).

2) Evaluation of rate properties

For the batteries of Examples 1, 2 and Comparative Example 2, under a condition in which a charging rate was fixed at 0.2 C, measurements were taken at various discharging rates from 0.1 C to 3.0 C, and then the batteries were discharged again at 0.2 C.

FIG. 11 is a graph showing results of a rate property evaluation of the batteries of Examples 1, 2 and Comparative Example 2.

Referring to FIG. 11, the battery of Comparative Example 2 exhibited a relatively lower discharge capacity than the batteries of Examples 1 and 2 at rates of 0.1, 0.2, 0.5, 1.0, 2.0, and 3.0 C.

(3) Evaluation of cycle life properties

1) For the batteries of Examples 1, 2 and Comparative Example 2, CC-CV 1.0 C charging and 1.0 C discharging were repeatedly performed in the voltage range of 3.0 V to 4.3 V, and discharge capacity and Coulombic efficiency were measured.

Furthermore, for the batteries of Examples 1, 2 and Comparative Example 2, CC-CV 2.0 C charging and 2.0 C discharging as one cycle in a voltage range of 3.0 V to 4.3 V were repeatedly performed, and discharge capacity and Coulombic efficiency were measured.

Additionally, for the batteries of Examples 2 and Comparative Example 2, CC-CV 1.0 C charging and 1.0 C discharging were repeatedly performed in the voltage range of 3.0 V to 4.4 V, and discharge capacity and Coulombic efficiency were measured.

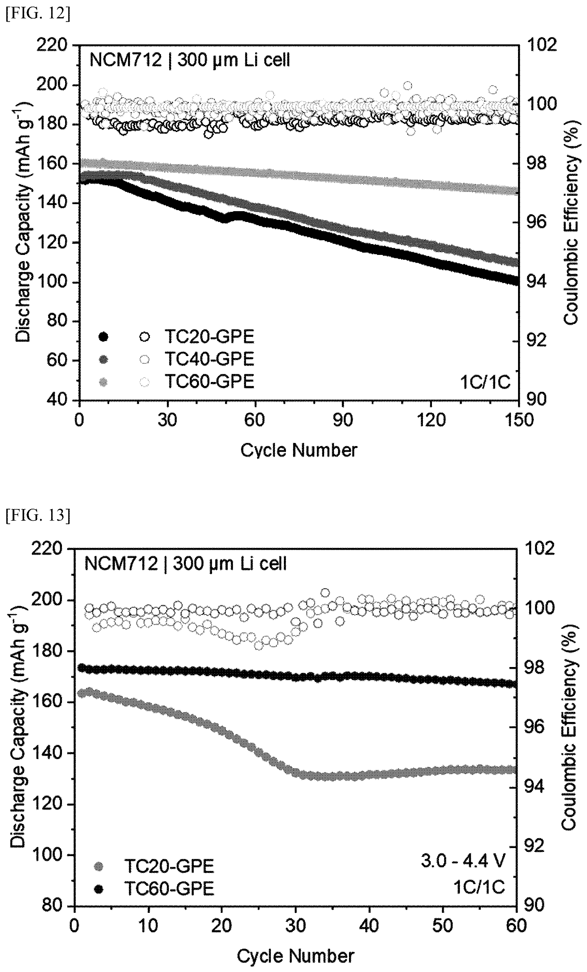

FIG. 12 is a graph showing discharge capacity and Coulombic efficiency as a function of the number of 1C/1C cycles from 3.0 V to 4.3 V of the batteries of Examples 1 and 2 and Comparative Example 2. FIG. 13 is a graph showing discharge capacity and Coulombic efficiency as a function of the number of cycles up to 60 in the charge and discharge operating voltage range of 3.0 to 4.4 V of the batteries of Example 2 and Comparative Example 2.

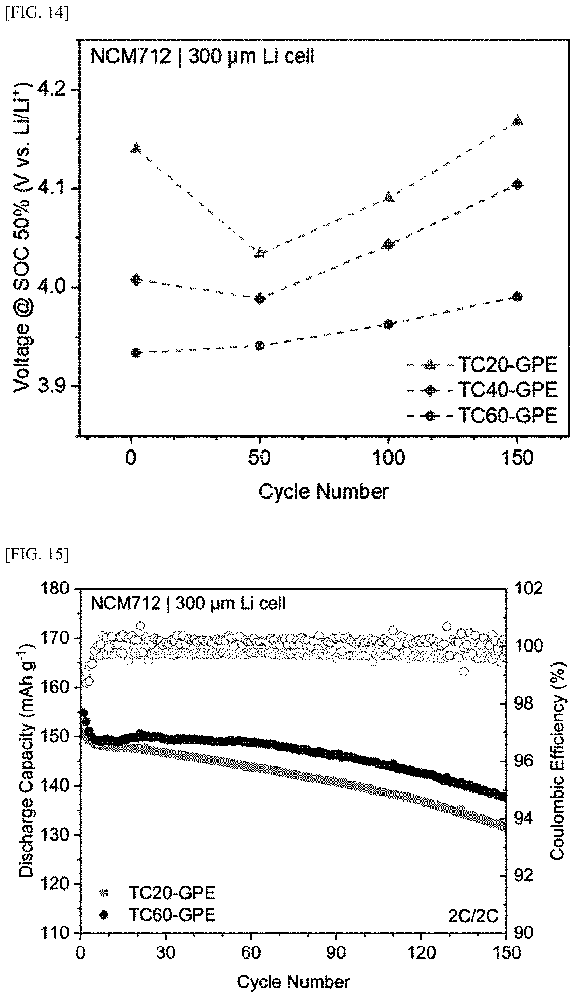

FIG. 14 is a voltage graph at the 50% state of charge (SOC) point at 1, 50, 100, and 150 cycles of the batteries of Examples 1 and 2 and Comparative Example 2.

Referring to FIG. 14, as the thermal curing time decreased, the voltage at the SOC 50% point increased. This may mean that as the thermal curing process time is shorter, such as in comparative example 2, and thus a gel polymer electrolyte including a larger content of unreacted cross-linkable monomer is included, a larger overvoltage is required to charge up to SOC 50%.

FIG. 15 is a graph showing discharge capacity and Coulombic efficiency as a function of the number of 2C/2C cycles of the batteries of Example 2 and Comparative Example 2.

Referring to FIGS. 12 to 15, the battery of Comparative Example 2 exhibited a rapid decrease in discharge capacity and Coulombic efficiency with repeated charge and discharge cycles, resulting in relatively deteriorated cycle life properties compared to the batteries of Examples 1 and 2.

Referring to FIG. 13, due to the low oxidative stability of the ETPTA monomer, Comparative Example 2, which contained a large amount of residual monomer, exhibited a rapid decrease in discharge capacity from 163 mAh·g$^{-1}$ to 132.4 mAh·g$^{-1}$ over 30 cycles.

2) For the batteries of Examples 3 and 4, formation charging and discharging were performed using CC-CV 0.1 C charging and 0.1 C discharging in a voltage range of 3.0 V to 4.3 V, followed by repeated CC-CV 0.5 C charging and 0.5 C discharging as one cycle in a voltage range of 3.0 V to 4.3 V to measure the discharge capacity and Coulombic efficiency.

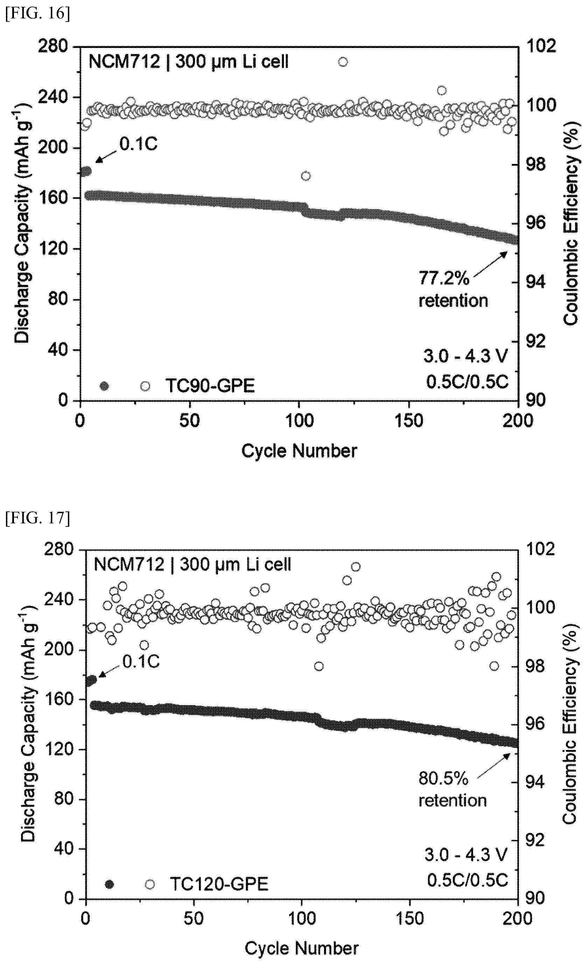

FIGS. 16 and 17 are graphs showing discharge capacity and Coulombic efficiency as a function of the number of 0.5C/0.5C cycles of the batteries of Examples 3 and 4, respectively.

Referring to FIGS. 16 and 17, the initial discharge capacity of the battery of Example 3 was 180.9 mAh·g$^{-1}$, while the initial discharge capacity of the battery of Example 4 was lower at 174.3 mAh·g$^{-1}$. This is because due to an excessive curing process, the viscosity of the gel polymer electrolyte became relatively too high, and accordingly, the ionic conductivity of the gel polymer electrolyte decreased.

3) Electrochemical impedance spectroscopy (EIS) analysis was performed on the batteries of Example 2 and Comparative Example 2 using the same method as described for FIG. 7.

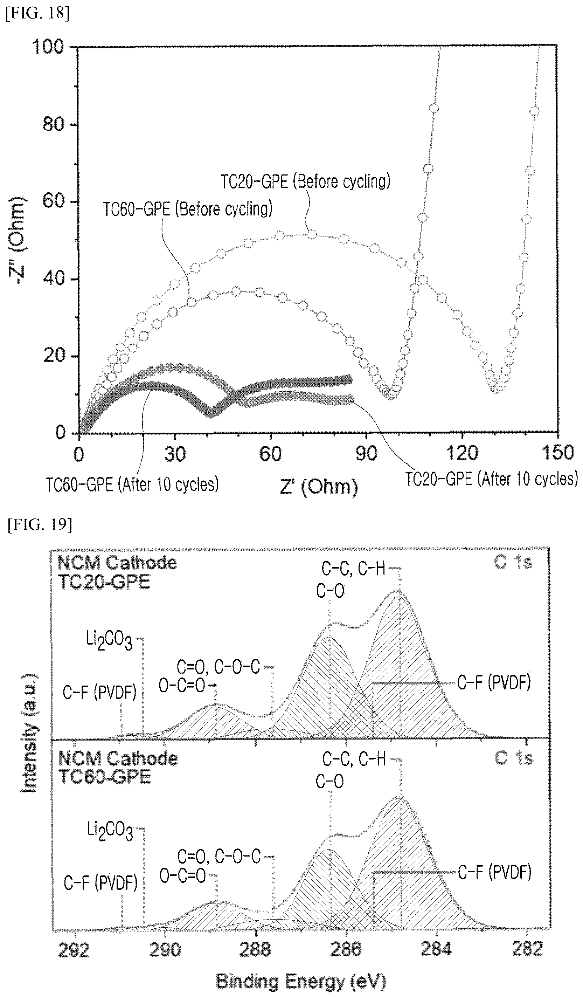

FIG. 18 is a graph showing the Nyquist plots of the batteries of Example 2 and Comparative Example 2 at the initial and after 10 cycles. Referring to FIG. 18, after 10 cycles, the interfacial resistance of the battery of Comparative Example 2 increased by a much larger difference than the resistance of the battery of Example 2.

**Experimental Example 2: Analysis of cathode-electrolyte interphase (CEI) after charging and discharging**

(1) After 100 cycles of 1C/1C cycles in a voltage range of 3.0 V to 4.3 V, the cathodes of the batteries of Example 2 and Comparative Example 2 were separated, and X-ray photoelectron spectroscopy (XPS) analysis of the cathode surface was performed using an XPS spectrometer (K-alpha, Thermo U.K.) equipped with an Al K$\alpha$ (1486.6 eV) source. All XPS spectra were calibrated to the C 1s (C-C) signal at 284.8 eV.

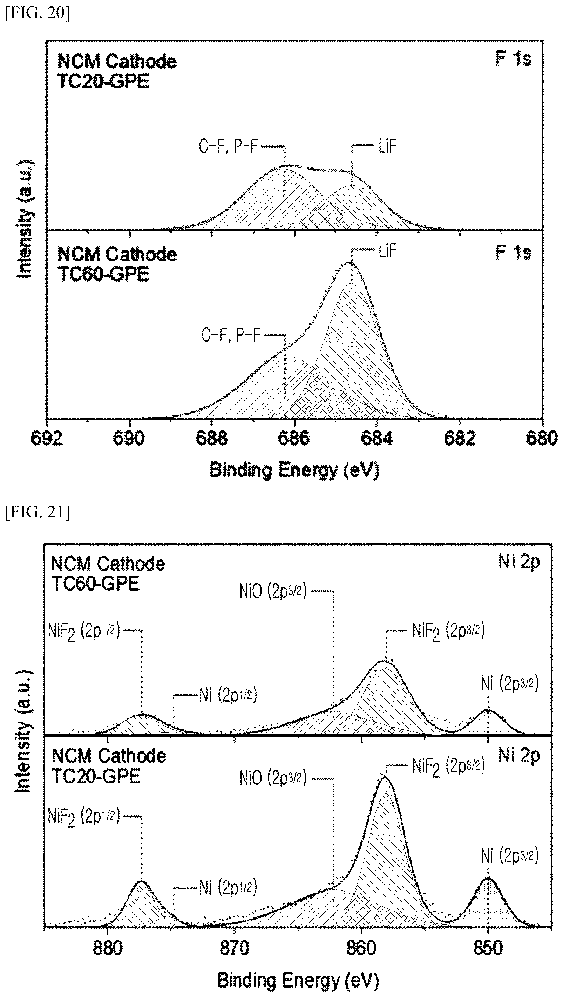

FIGS. 19 to 21 are the XPS spectra of C 1s, F 1s, and Ni 2p, respectively of the cathodes of Example 2 and Comparative Example 2 after charging and discharging.

Referring to FIGS. 19 to 21, in the analysis results of the half-cell of comparative example 2, the intensity of the peaks associated with the decomposition byproducts of solvents and monomers, such as C-O (286.3 eV), C=O/C-O-C (287.6 eV), and O-C=O (288.9 eV) was higher than the analysis results of the battery of Example 2. In addition, the LiF peak (685.8 eV) exhibited a higher intensity in Example 2 than in Comparative Example 2, indicating that ETPTA, which has a higher HOMO level than FEC, was relatively more decomposed in Comparative Example 2, leading to greater formation of stable LiF in Example 2.

Furthermore, after charging and discharging in Comparative Example 2, the surface of the cathode exhibited distinct peaks corresponding to $NiF_2$ ($2p^{3/2}$, 858.1 eV), $NiF_2$ ($2p^{1/2}$, 877.4 eV), and NiO (862.3 eV) species, which resulted from the side reaction between nickel and HF, which is a decomposition product of the lithium salt. This may be a result of a stable LiF layer not being formed on the cathode surface of Comparative Example 2.

(2) In the batteries of Example 2 and Comparative Example 2, the cathodes were separated after 100 cycles of 1C/1C, and in-depth surface analysis was performed using time-of-flight secondary ion mass spectrometry (TOF-SIMS). The sputtering area was $300 \times 300$ $\mu$m$^2$, and the analysis was carried out using a sputter gun with a Cs$^+$ ion beam (500 eV, 40 nA).

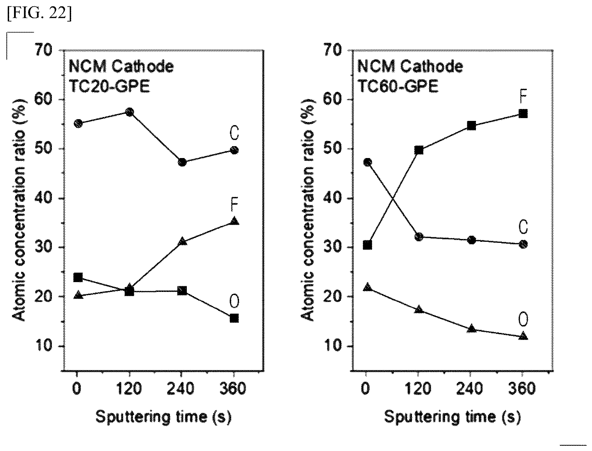

FIG. 22 is profiles of XPS depth of the cathodes of Example 2 and Comparative Example 2 after charging and discharging.

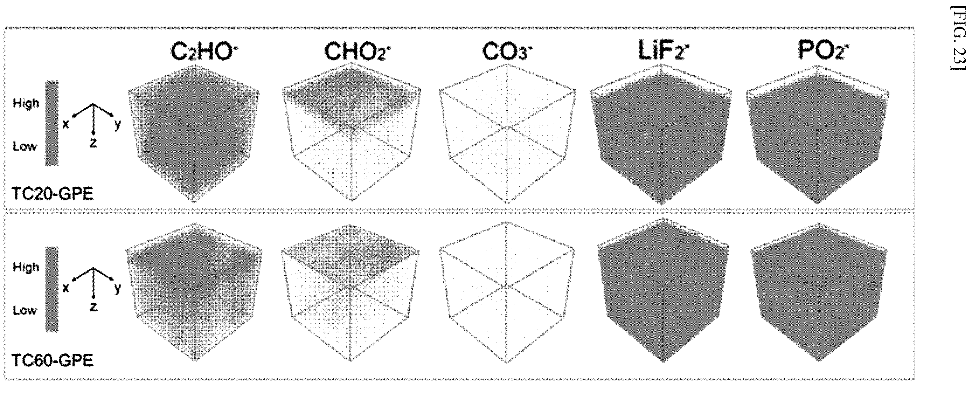

FIG. 23 is 3D schematic diagrams of TOF-SIMS of the cathodes of Example 2 and Comparative Example 2, respectively, after charging and discharging.

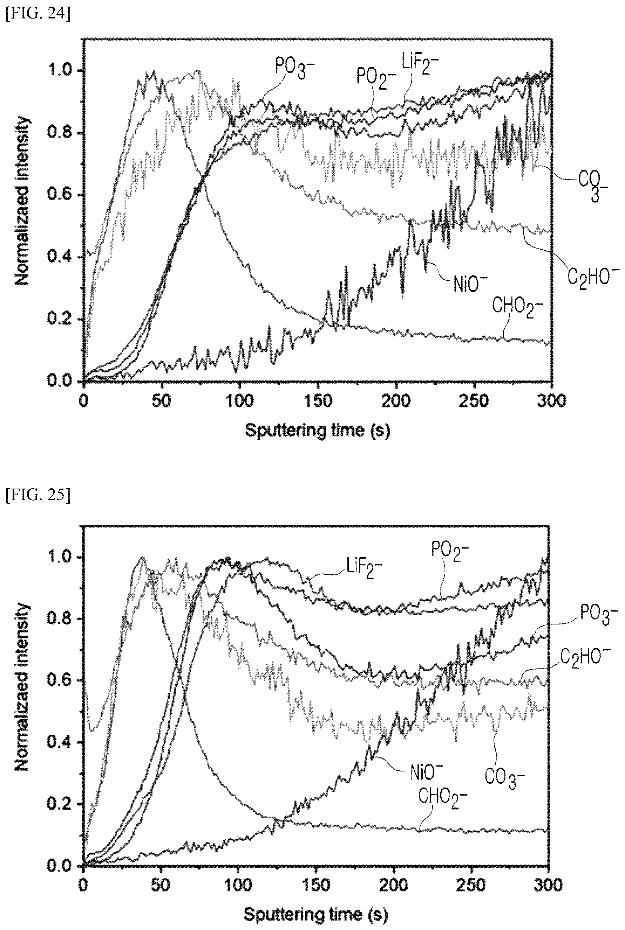

FIGS. 24 and 25 are normalized TOF-SIMS depth profiles of the cathodes of Example 2 and Comparative Example 2 after charging and discharging, respectively.

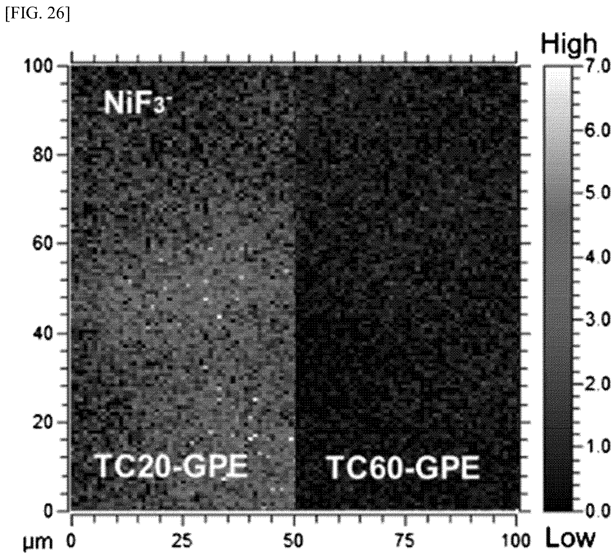

FIG. 26 is a $NiF_3^-$ 2D mapping image of surface TOF-SIMS of the cathodes of Example 2 and Comparative Example 2 after charging and discharging.

Referring to FIG. 22, on the surface (0 seconds of sputtering), the CEI layer of the cathode of Comparative Example 2 was composed of 55.4%, 24.1%, and 20.5% of C, O, and F atomic ratios, respectively. In addition, the CEI layer of the cathode of Example 2 was composed of approximately 47.6%, 21.9%, and 30.5% of C, O, and F atomic ratios on the surface, respectively.

In the cathode of Example 2, an inversion in the concentration ratio between C and F occurred near the cathode surface (between 0 and 120 seconds of sputtering), and after 120 seconds, the F ratio became higher than the C ratio. In contrast, in the cathode of Comparative Example 2, a gradual decrease in the concentration of C and an increase in concentration of F were observed between 120 and 240 seconds of sputtering, with C being measured at a higher ratio than F and O.

This indicates that the accelerated solvent decomposition reaction and inhibition of FEC decomposition occurred due to the radical reaction of ETPTA, leading to the formation of a thicker organic-based resistive layer within the CEI structure.

Furthermore, referring to FIG. 23, the distribution of various species within the cathode corresponding to $C_2HO^-$, $CHO_2^-$, $CO_3^-$, $LiF_2^-$, and $PO_2^-$ was observed.

In Comparative Example 2, the signals associated with solvent and cross-linkable monomer decomposition byproducts (e.g., $C_2HO^-$, $CHO_2^-$, and $CO_3^-$ fragments) were stronger, whereas the signals related to FEC and $LiPF_6$ decomposition byproducts (e.g., $LiF_2^-$ and $PO_2^-$) were relatively weaker than those in Example 2.

Referring to FIGS. 24 and 25, a thicker organic resistive layer was formed on the surface of the cathode of Comparative Example 2 than on the cathode of Example 2, which impeded lithium-ion diffusion.

Referring to FIG. 26, a stronger and more irregular $NiF_3^-$ signal was observed on the surface of the cathode of Comparative Example 2 after charging and discharging. This signal corresponds to a nickel reduction product.

**Experimental Example 3: Analysis of cathode active material degradation after charging and discharging**

The cathode active material was separated from the cathodes of half-cells of Example 2 and Comparative Example 2 after charging and discharging. High-resolution transmission electron microscopy (HR-TEM, JSM-ARM200F (NEOARM), JEOL) images of the cathode active material were captured, and the corresponding fast Fourier transform (FFT) patterns were analyzed. Cross-sectional scanning electron microscopy (SEM) images of the cathode active material particles were also captured.

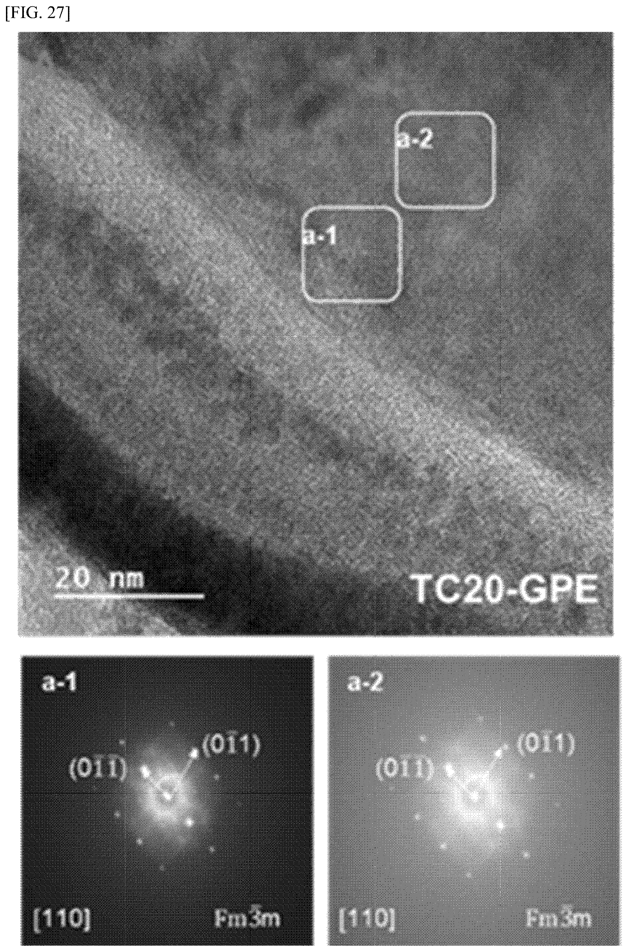

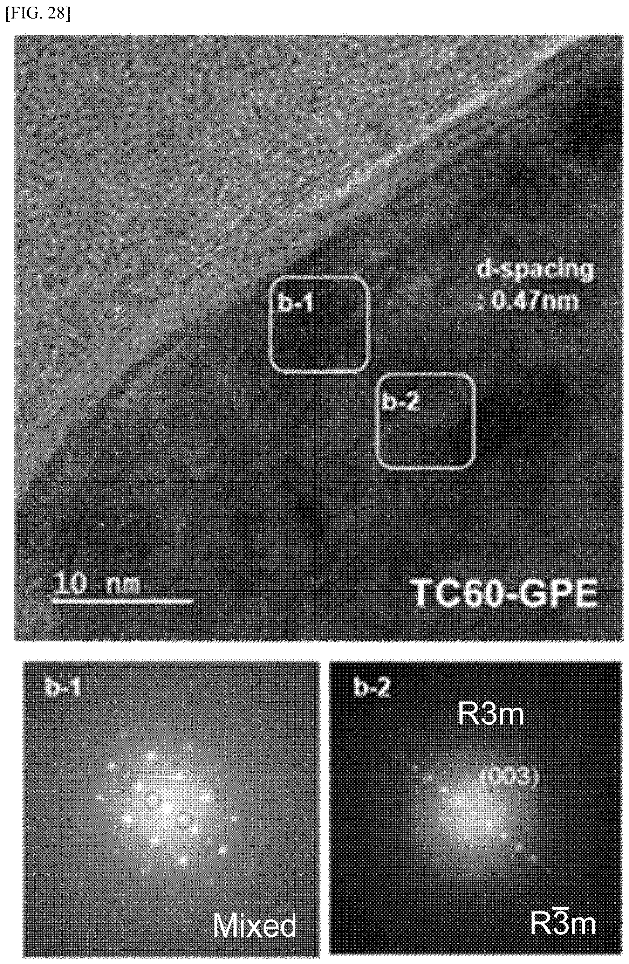

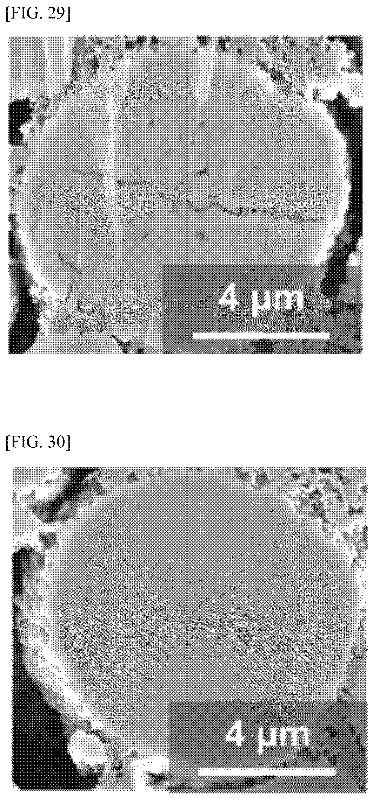

FIGS. 27 and 28 are HR-TEM images of the cathode active materials of Comparative Example 2 and Example 2, respectively after charging and discharging, and FIGS. 29 and 30 are cross-sectional SEM images of the cathode active materials of Comparative Example 2 and Example 2, respectively after charging and discharging.

Referring to FIGS. 27 to 30, in the cathode active material of Comparative Example 2, an irreversible rock-salt phase was observed in both regions (a-1) and (a-2). The local formation of electrochemically inactive rock-salt structures (NiO) may impede lithium-ion migration, negatively affecting electrochemical performance such as ionic conductivity and reversible discharge capacity.

In the cathode active material of Example 2, a mixed phase (approximately 10 nm thick) was formed, and the layered structure was maintained even after repeated charge and discharge cycles.

Furthermore, cracks were observed in the cathode active material of Comparative Example 2, indicating particle fracture. As described with reference to FIG. 23, a non-uniform, high-resistance CEI was formed on the surface of the cathode of Comparative Example 2 due to the oxidation reaction of the cross-linkable monomer. Accordingly, during repeated charging and discharging, particle cracking may be accelerated by local volume changes in the cathode active material caused by lithium-ion intercalation and deintercalation, and side reactions with the electrolyte may also be accelerated in the regions exposed by the cracks.

**Experimental Example 4: Analysis of transition metal deposition on the surface of lithium metal anode**

In the half-cells of Example 2 and Comparative Example 2, the lithium metal anodes were separated after 100 cycles at 1C/1C in a voltage range of 3.0 V to 4.3 V, and the concentrations of transition metals deposited on their surfaces were measured using inductively coupled plasma mass spectrometry (ICP-MS, 7900, Agilent).

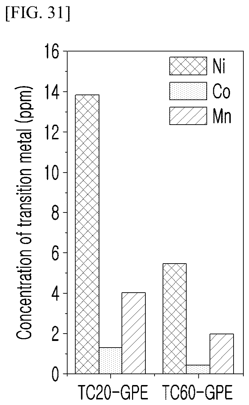

FIG. 31 is a graph showing an amount of transition metal deposition on the surfaces of the lithium metal anodes of Example 2 and Comparative Example 2 after charging and discharging.

Referring to FIG. 31, a greater amount of Ni, Co and Mn was observed on the surface of the lithium metal anode of Comparative Example 2 after charging and discharging than on the surface of the lithium metal anode of Example 2 after charging and discharging. This was attributed to the active dissolution of transition metals from the cathode active material in the gel polymer electrolyte of Comparative Example 2, which contained a large amount of unreacted monomer.

**Claims**

1. A secondary battery comprising:

   a cathode;
   an anode facing the cathode; and
   a gel polymer electrolyte including a cross-linkable monomer, a polymerization product of the crosslinkable monomer, and a liquid electrolyte,
   wherein a conversion rate of the cross-linkable monomer is 85% or more.

2. The secondary battery according to claim 1, wherein the conversion rate of the cross-linkable monomer is 88% or more.

3. The secondary battery according to claim 1 or claim 2, wherein the conversion rate of the cross-linkable monomer is defined by Equation 1 below:

[Equation 1]

$$\text{Conversion rate (\%)} = \left\{1 - \frac{1}{3} \times \left(\frac{I_t^1}{I_0^1} + \frac{I_t^2}{I_0^2} + \frac{I_t^3}{I_0^3}\right)\right\} \times 100$$

wherein, in Equation 1, the secondary battery is prepared from a preliminary secondary battery comprising a cathode, an anode, and a composition for a gel polymer electrolyte including the cross-linkable monomer and the liquid electrolyte,

according to $^1$H NMR analysis of the composition for the gel polymer electrolyte and the gel polymer electrolyte, at least one first peak within a range of 6.25 ppm to 6.4 ppm; at least one second peak within a range of 6 ppm or more and less than 6.25 ppm; at least one third peak within a range of 5.5 ppm or more and less than 6 ppm; and at least one fourth peak within a range of 4 ppm to 5 ppm are observed, respectively,

$I_0^1$ is a ratio of an integral area of the first peak to an integral area of the fourth peak before curing of the composition for the gel polymer electrolyte, $I_0^2$ is a ratio of an integral area of the second peak to the integral area of the fourth peak before curing of the composition for the gel polymer electrolyte, and $I_0^3$ is a ratio of an integral area of the third peak to the integral area of the fourth peak before curing of the composition for the gel polymer electrolyte, and $I_t^1$ is a ratio of an integral area of the first peak to an integral area of the fourth peak when the curing time of the gel polymer electrolyte is t minutes, $I_t^2$ is a ratio of an integral area of the second peak to the integral area of the fourth peak when the curing time of the gel polymer electrolyte is t minutes, and $I_t^3$ is a ratio of an integral area of the third peak to the integral area of the fourth peak when the curing time of the gel polymer electrolyte is t minutes.

4. The secondary battery according to any one of claims 1 to 3, wherein the conversion rate of the cross-linkable monomer is defined by Equation 2 below:

[Equation 2]

$$\text{Conversion rate (\%)} = \left(1 - \frac{A_{C=C,t}/A_{ref,t}}{A_{C=C,0}/A_{ref,0}}\right) \times 100$$

wherein, in Equation 2, the secondary battery is prepared from a preliminary secondary battery comprising a cathode, an anode, and a composition for a gel polymer electrolyte including the cross-linkable monomer and the liquid electrolyte,

$A_{ref,0}$ is an integral area of a peak within the range of 1800 cm$^{-1}$ to 1810 cm$^{-1}$ or an integral area of a peak within the range of 1065 cm$^{-1}$ to 1075 cm$^{-1}$, as determined by Fourier transform infrared (FT-IR) analysis before curing the composition for the gel polymer electrolyte,

$A_{c=c,0}$ is an integral area of a peak within the range of 1615 cm$^{-1}$ to 1625 cm$^{-1}$ or an integral area of a peak within the range of 1630 cm$^{-1}$ to 1640 cm$^{-1}$, as determined by Fourier transform infrared (FT-IR) analysis before curing the composition for the gel polymer electrolyte,

$A_{ref,t}$ is an integral area of a peak within the range of 1800 cm$^{-1}$ to 1810 cm$^{-1}$ or an integral area of a peak within the range of 1065 cm$^{-1}$ to 1075 cm$^{-1}$, as determined by Fourier transform infrared (FT-IR) analysis when the curing time of the gel polymer electrolyte is t minutes, and

$A_{c=c,t}$ is an integral area of a peak within the range of 1615 cm$^{-1}$ to 1625 cm$^{-1}$ or an integral area of a peak within the range of 1630 cm$^{-1}$ to 1640 cm$^{-1}$, as determined by Fourier transform infrared (FT-IR) analysis when the curing time of the gel polymer electrolyte is t minutes.

5. The secondary battery according to any one of claims 1 to 4, wherein the cross-linkable monomer is included in an amount of 15 wt% or less, based on the total weight of the cross-linkable monomer and the polymerization product of the cross-linkable monomer.

6. The secondary battery according to any one of claims 1 to 5, wherein the cross-linkable monomer comprises an acrylate-based compound having a functionality of 2 to 6.

7. The secondary battery according to any one of claims 1 to 6, wherein a ratio of a weight of the liquid electrolyte to a weight of the cross-linkable monomer is 6 to 20.

8. The secondary battery according to any one of claims 1 to 7, wherein the liquid electrolyte comprises a lithium salt and an organic solvent including ethylene carbonate.

9. A method of preparing a secondary battery, comprising:

   sequentially stacking a cathode, a separator, and an anode to prepare a stacked body;
   housing the stacked body in an outer case and injecting a composition for a gel polymer electrolyte comprising a cross-linkable monomer, a thermal initiator, and a liquid electrolyte to prepare a preliminary secondary battery; and
   thermally curing the preliminary secondary battery for 30 minutes to 150 minutes to form a gel polymer electrolyte.

10. The method according to claim 9, wherein the thermal curing treatment is performed for 40 minutes to 120 minutes.

11. The method according to claim 9 or claim 10, wherein the thermal curing treatment is performed at a temperature of 50°C to 100°C.

12. The method according to any one of claims 9 to 11, wherein a ratio of a weight of the liquid electrolyte to a weight of the cross-linkable monomer is 6 to 20.

13. The method according to any one of claims 9 to 12, wherein the thermal initiator comprises at least one selected from the group consisting of t-butyl peroxy pivalate, azobisisobutyronitrile, and benzoyl peroxide.

14. The method according to any one of claims 9 to 13, wherein a content of the thermal initiator is 0.1 parts by weight to 3 parts by weight based on 100 parts by weight of the crosslinkable monomer.

15. The method according to any one of claims 9 to 14, wherein the liquid electrolyte comprises a lithium salt and an organic solvent comprising ethylene carbonate, and a content of the ethylene carbonate is 30 vol% to 70% of a total volume of the organic solvent.

[FIG. 1]

[FIG. 2]

[FIG. 3]

[FIG. 4]

[FIG. 5]

[FIG. 6]

[FIG. 7]

EP 4 769 613 A1

[FIG. 8]

25

[FIG. 9]

[FIG. 10]

[FIG. 11]

[FIG. 12]

[FIG. 13]

[FIG. 14]

[FIG. 15]

[FIG. 16]

[FIG. 17]

[FIG. 18]

[FIG. 19]

[FIG. 20]

[FIG. 21]

[FIG. 22]

[FIG. 23]

[FIG. 24]

[FIG. 25]

[FIG. 26]

[FIG. 27]

[FIG. 28]

[FIG. 29]

[FIG. 30]

[FIG. 31]

Europäisches
Patentamt

European
Patent Office

Office européen
des brevets

**EUROPEAN SEARCH REPORT**

**Application Number**

EP 25 22 5228

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2023 0032400 A (HYUNDAI MOTOR CO LTD [KR]; KIA CORP [KR]; IUCF HYU [KR]) 7 March 2023 (2023-03-07) | 1-3,5-7 | INV. H01M10/0525 H01M10/0565 |
| A | * paragraphs [0003], [0004], [0051], [0111]; claims 4,10; figure 4; examples * | 8-15 | H01M10/0566 H01M10/0585 |
| A | FR 3 138 568 A1 (ACCUMULATEURS FIXES [FR]) 2 February 2024 (2024-02-02) * paragraphs [0006], [0042], [0047], [0067], [0068], [0069]; claim 1 * | 4 | ADD. H01M10/0569 |
| A | US 2010/136435 A1 (YU SUNGHOON [KR] ET AL) 3 June 2010 (2010-06-03) * example 7 * | 9-15 | |
| X | KR 2024 0023376 A (LG ENERGY SOLUTION LTD [KR]) 21 February 2024 (2024-02-21) | 1,2,4-8 | |
| A | * claims; figures; examples * | 9-15 | |
| X | KIM H-S ET AL: "ELECTROCHEMICAL PERFORMANCES OF LITHIUM-ION POLYMER BATTERY WITH POLYOXYALKYLENE GLYCOL ACRYLATE-BASED GEL POLYMER ELECTROLYTE", JOURNAL OF NEW MATERIALS FOR ELECTROCHEMICAL SYSTEMS. ECOLE POLYTECHNIQUE DE MONTREAL, MONTREAL., CA, vol. 09, no. 01, 1 January 2006 (2006-01-01), pages 15-20, XP001504997, ISSN: 1480-2422 * paragraph [0002] * | 9-15 | TECHNICAL FIELDS SEARCHED (IPC) H01M |

-/--

The present search report has been drawn up for all claims

| Place of search | Date of completion of the search | Examiner |
|---|---|---|
| Munich | 6 May 2026 | Masson, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

**Application Number**

**EP 25 22 5228**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SEOHA NAM ET AL: "Mitigating Gas Evolution in Electron Beam-Induced Gel Polymer Electrolytes Through Bi-Functional Cross-Linkable Additives", SMALL WILEY, HOBOKEN, USA, vol. 20, no. 35, 30 April 2024 (2024-04-30), pages n/a-n/a, XP072693991, ISSN: 1613-6810, DOI: 10.1002/SMLL.202401426 * paragraph [0002]; figures * | 1-15 | |
| A | LIN CHENYU ET AL: "Ternary stabilization strategies for succinonitrile-based in situ polymerized electrolyte enabling high-performance solid lithium metal batteries", CHEMICAL ENGENEERING JOURNAL ELSEVIER, AMSTERDAM, NL, vol. 495, 26 June 2024 (2024-06-26), XP087585193, ISSN: 1385-8947, DOI: 10.1016/J.CEJ.2024.153541 [retrieved on 2024-06-26] * paragraph [0002] * * page 2, left-hand column, paragraph 1 * | 1-15 | TECHNICAL FIELDS SEARCHED (IPC) |

The present search report has been drawn up for all claims

| Place of search | Date of completion of the search | Examiner |
|---|---|---|
| Munich | 6 May 2026 | Masson, Patrick |

**page 2 of 2**

## ANNEX TO THE EUROPEAN SEARCH REPORT
## ON EUROPEAN PATENT APPLICATION NO.

EP 25 22 5228

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2026

| Patent document cited in search report | | Publication date | Patent family member(s) | | Publication date |
|---|---|---|---|---|---|
| KR 20230032400 | A | 07-03-2023 | KR 20230032400 A | | 07-03-2023 |
| | | | US 2023069409 A1 | | 02-03-2023 |
| FR 3138568 | A1 | 02-02-2024 | CN 119731799 A | | 28-03-2025 |
| | | | EP 4562691 A1 | | 04-06-2025 |
| | | | FR 3138568 A1 | | 02-02-2024 |
| | | | US 20260045544 A1 | | 12-02-2026 |
| | | | WO 2024022807 A1 | | 01-02-2024 |
| US 2010136435 | A1 | 03-06-2010 | CN 101622750 A | | 06-01-2010 |
| | | | EP 2149172 A1 | | 03-02-2010 |
| | | | JP 2010527133 A | | 05-08-2010 |
| | | | KR 20080101702 A | | 21-11-2008 |
| | | | US 2010136435 A1 | | 03-06-2010 |
| | | | WO 2008140256 A1 | | 20-11-2008 |
| KR 20240023376 | A | 21-02-2024 | CN 119585902 A | | 07-03-2025 |
| | | | EP 4571916 A1 | | 18-06-2025 |
| | | | KR 20240023376 A | | 21-02-2024 |

EPO FORM P0459

For more details about this annex : see Official Journal of the European Patent Office, No. 12/82